(19) Europäisches Patentamt / European Patent Office / Office européen des brevets

(11) **EP 3 526 919 B1**

(12) **FASCICULE DE BREVET EUROPEEN**

(45) Date de publication et mention de la délivrance du brevet:
**27.03.2024 Bulletin 2024/13**

(21) Numéro de dépôt: **17794379.2**

(22) Date de dépôt: **16.10.2017**

(51) Classification Internationale des Brevets (IPC):
*H04L 1/00* $^{(2006.01)}$   *H04L 5/00* $^{(2006.01)}$
*H04L 27/26* $^{(2006.01)}$   *H04L 25/03* $^{(2006.01)}$

(52) Classification Coopérative des Brevets (CPC):
**H04L 5/0044; H04L 1/0042; H04L 1/0068;
H04L 1/007; H04L 5/006; H04L 25/03343;
H04L 25/03821; H04L 27/2627; H04L 27/2698**

(86) Numéro de dépôt international:
**PCT/FR2017/052836**

(87) Numéro de publication internationale:
**WO 2018/069661 (19.04.2018 Gazette 2018/16)**

(54) **ICI AND ISI-BASED SELECTIVE MAPPING FOR FASTER THAN NYQUIST OQAM OFDM**

VERFAHREN ZUR HERSTELLUNG EINES MEHRTRÄGERSIGNALS, VORRICHTUNG UND ZUGEHÖRIGES COMPUTERPROGRAMM

METHOD FOR PRODUCING A MULTI-CARRIER SIGNAL, DEVICE, AND CORRESPONDING COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2016 FR 1659988**

(43) Date de publication de la demande:
**21.08.2019 Bulletin 2019/34**

(73) Titulaire: **Orange
92130 Issy-les-Moulineaux (FR)**

(72) Inventeurs:
- **LAHBABI, Naila**
  **92326 Châtillon Cedex (FR)**
- **LIN, Hao**
  **92326 Châtillon Cedex (FR)**
- **ABDEL NOUR, Charbel**
  **92326 Châtillon Cedex (FR)**
- **DOUILLARD, Catherine**
  **92326 Châtillon Cedex (FR)**

(74) Mandataire: **Vidon Brevets & Stratégie
16B, rue de Jouanet
BP 90333
35703 Rennes Cedex 7 (FR)**

(56) Documents cités:
EP-A2- 2 320 574    US-A1- 2002 146 074
US-A1- 2010 104 044    US-A1- 2012 207 223
US-B2- 8 781 006

- **NAILA LAHBABI ET AL: "Sparse interference pre-cancellation for FTN-OQAM systems", INTERNET CITATION, 18 mai 2016 (2016-05-18), pages 1581-1585, XP002761336, Extrait de l'Internet: URL:http://ieeexplore.ieee.org/document/74 99264/?arnumber=7499264&tag=1 [extrait le 2016-08-31]**

**Description**

**1. Domaine de l'invention**

Le domaine de l'invention est celui des communications mettant en oeuvre une modulation multiporteuse, par exemple de type OFDM, OFDM/OQAM, BFDM/OQAM, etc.

Plus précisément, l'invention propose une technique de modulation permettant d'optimiser la transmission de certaines données, en réduisant par exemple l'interférence affectant ces données.

Dans un mode de réalisation particulier, l'invention offre une solution pour une transmission des données au-delà de la cadence de Nyquist (en anglais FTN pour « Faster Than Nyquist »).

L'invention trouve notamment des applications dans le domaine des communications sans fil (DAB, DVB-T, WLAN, optique non guidée, etc.) ou filaires (xDSL, PLC, optique, etc.). Par exemple, l'invention trouve des applications dans le domaine des communications cellulaires, sur voix montante ou descendante, des communications entre dispositifs (en anglais D2D pour « Device to Device »), des communications à partir d'un réseau de réacheminement (en anglais « backhauling »), etc.

**2. Art antérieur**

Les techniques de transmission à porteuses multiples présentent de nombreux avantages, notamment dans le contexte de canaux multi-trajets. Ainsi, les modulations de type OFDM sont particulièrement bien adaptées pour contrer les effets des évanouissements dans les canaux sélectifs en fréquence.

Toutefois, ces modulations OFDM présentent l'inconvénient de générer un signal multiporteuse présentant une mauvaise localisation fréquentielle, et nécessitent donc l'introduction d'un intervalle de garde dans le domaine temporel pour limiter les interférences. Or l'insertion d'un tel intervalle de garde engendre une diminution de l'efficacité spectrale du signal multiporteuse.

Des solutions alternatives ont été proposées pour limiter les interférences tout en s'affranchissant de l'insertion d'un intervalle de garde. Ces techniques reposent sur la mise en forme du signal par des filtres (pour un signal discrétisé) ou des fonctions (pour un signal continu), dits prototypes, permettant une meilleure localisation fréquentielle grâce à des propriétés d'orthogonalité restreintes au corps des réels. Il s'agit par exemple des modulations de type

Par ailleurs, afin de réduire le temps de transmission pour un volume d'information donné ou, en d'autres termes, d'augmenter le volume d'information pour un temps de transmission donné, il est également connu d'utiliser une transmission FTN pour des systèmes de transmission de type OFDM ou OFDM/OQAM.

Cependant, la transmission FTN génère de fortes interférences, et nécessite donc la mise en oeuvre d'un traitement complexe en réception pour reconstruire les données transmises.

Il existe donc un besoin pour une nouvelle technique de transmission multiporteuse permettant de limiter les interférences entre porteuses et/ou entre symboles multiporteuses.

**3. Exposé de l'invention**

L'invention propose une solution nouvelle qui ne présente pas l'ensemble des inconvénients de l'art antérieur, sous la forme d'un procédé de génération d'un signal multiporteuse, formé d'une succession temporelle de symboles multiporteuses tel que revendiqué dans la revendication 1.

L'invention propose ainsi une nouvelle solution pour la génération d'un signal multiporteuse permettant de construire de façon astucieuse les symboles multiporteuses.

En particulier, l'invention propose de mettre en oeuvre un poinçonnage sur les sous-ensembles d'éléments codés, selon un premier et un deuxième motif de poinçonnage permettant d'atteindre un rendement souhaité. Par exemple, les premier et deuxième motifs de poinçonnage, qui peuvent être distincts, permettant de définir un premier rendement de codage $r_1$ pour le premier sous-ensemble d'éléments codés poinçonnés, et un deuxième rendement de codage $r_2$ pour le deuxième sous-ensemble d'éléments codés poinçonnés. Ces premier et deuxième rendements de codage peuvent être identiques ou différents.

On peut ainsi choisir d'offrir un degré de protection différent aux éléments codés du premier sous-ensemble d'éléments codés et aux éléments codés du deuxième sous-ensemble d'éléments codés.

Ces premier et deuxième rendements de codage sont définis de façon à respecter un rendement de codage global de la chaine de modulation, noté $r$, tel que $B = N/r$, avec $N$ le nombre d'éléments d'information en entrée de l'étape de codage, et $B$ le nombre d'éléments codés poinçonnés en entrée de l'étape de mappage sur les symboles complexes.

Selon un premier exemple, le rendement de codage $r_1$, associé aux étapes de codage et de poinçonnage du premier sous-ensemble d'éléments codés, est supérieur au rendement de codage $r_2$, associé aux étapes de codage et de poinçonnage du deuxième sous-ensemble d'éléments codés. Cela signifie qu'on cherche à mieux protéger les éléments du deuxième sous-ensemble d'éléments codés poinçonnés utilisés pour construire les symboles complexes.

Selon un deuxième exemple, le rendement de codage $r_1$ est inférieur au rendement de codage $r_2$. Cela signifie qu'on cherche à mieux protéger les éléments du premier sous-ensemble d'éléments codés poinçonnés utilisés pour construire les symboles complexes.

Selon un troisième exemple, le rendement de codage $r_1$ est égal au rendement de codage $r_2$. On offre ainsi un même degré de protection aux éléments du premier sous-ensemble d'éléments codés poinçonnés et du deuxième sous-ensemble d'éléments codés poinçonnés.

Les $B$ éléments codés poinçonnés sont ensuite mappés sur les symboles complexes, et les symboles complexes sont mappés sur des porteuses du bloc de symboles multiporteuses. On rappelle qu'un symbole multiporteuse est formé par un ensemble de porteuses à différentes fréquences, à un instant donné, chaque porteuse étant modulée par la partie réelle et/ou imaginaire d'un symbole complexe.

On note que l'invention peut s'appliquer à des systèmes de modulations multiporteuses satisfaisant initialement soit la condition d'orthogonalité complexe (comme pour l'OFDM), soit la condition d'orthogonalité réelle (comme pour l'OFDM/OQAM). Les « symboles complexes » peuvent donc en particulier être à partie imaginaire nulle i.e. de type réel et/ou à partie réelle nulle. En particulier, en OFDM, un symbole complexe est mappé vers une position en temps et plusieurs positions en fréquence pour construire un symbole multiporteuse OFDM. En OFDM/OQAM, la partie réelle d'un symbole complexe est mappée vers une position en temps et plusieurs positions en fréquence, et la partie imaginaire vers une position suivante en temps et plusieurs positions en fréquence, pour construire deux symboles multiporteuses OFDM/OQAM. Classiquement, le temps entre deux symboles multiporteuses OFDM est deux fois plus long que le temps entre deux symboles multiporteuses OFDM/OQAM. L'ensemble des symboles multiporteuses obtenus à partir des symboles complexes forme un bloc de symboles multiporteuses.

En particulier, le signal multiporteuse est formé d'une succession temporelle de symboles multiporteuses destinés à être transmis à une cadence supérieure à la cadence de Nyquist.

L'invention propose ainsi de réduire les interférences générées par une transmission FTN du signal multiporteuse.

De plus, la transmission FTN sous forme d'un multiplex fréquentiel permet de bénéficier des avantages des systèmes multiporteuses, comme la flexibilité du modulateur (par exemple la possibilité d'éteindre certaines porteuses) ou l'utilisation d'algorithmes efficaces pour l'implémentation du modem (par exemple à base de transformées de Fourier rapide : IFFT - en anglais « Inverse Fast Fourier Transform », ou FFT - en anglais « Fast Fourier Transform »).

La solution proposée offre ainsi une nouvelle technique de génération (ou construction) d'un signal multiporteuse permettant une augmentation du débit de transmission dans une bande de fréquence donnée, tout en permettant de réduire les interférences liées à la transmission FTN.

Selon un mode de réalisation particulier, le procédé de génération selon l'invention comprend en outre une étape de pré-codage d'un premier sous-ensemble de symboles complexes, délivrant un premier sous-ensemble de symboles complexes pré-codés, ladite étape de pré-codage modifiant la valeur d'un symbole complexe dudit premier sous-ensemble de symboles complexes pour tenir compte d'une interférence générée par au moins un autre symbole complexe destiné à être transmis au même instant ou à une même fréquence selon un motif de transmission temps-fréquence prédéterminé.

Selon ce mode de réalisation, l'étape de génération du bloc de symboles multiporteuses module chaque porteuse dudit bloc par un symbole complexe pré-codé du premier sous-ensemble de symboles complexes ou par un symbole complexe non pré-codé d'un deuxième sous-ensemble de symboles complexes, selon ledit motif de transmission prédéterminé.

On propose ainsi de pré-coder certains symboles complexes, avant leur transmission, en affectant une valeur particulière à certains symboles complexes, selon leur position après mappage temps-fréquence (i.e. leur emplacement temps-fréquence) dans un motif de transmission (i.e. dans le bloc de symboles multiporteuse à transmettre), pour que le symbole reçu à cette position ne soit pas, ou peu, entaché d'interférence (i.e. perturbé par une interférence). On pré-annule donc au moins partiellement les interférences devant affecter un symbole complexe, selon le motif de transmission utilisé.

En particulier, le premier sous-ensemble de symboles complexes est généré à partir des éléments codés poinçonnés du premier sous-ensemble d'éléments codés, et le deuxième sous-ensemble de symboles complexes est généré à partir des éléments codés poinçonnés du deuxième sous-ensemble d'éléments codés.

On peut donc, selon ce mode de réalisation, offrir un degré de protection différent aux éléments codés poinçonnés du premier sous-ensemble associés à des symboles complexes destinés à être pré-codés, et aux éléments codés poinçonnés du deuxième sous-ensemble associés à des symboles complexes non destinés à être pré-codés.

Selon une caractéristique particulière, le procédé selon l'invention comprend en outre une première étape d'entrelacement des éléments codés poinçonnés du premier sous-ensemble d'éléments codés poinçonnés et une deuxième étape d'entrelacement des éléments codés poinçonnés du deuxième sous-ensemble d'éléments codés poinçonnés, mises en oeuvre préalablement à l'étape de mappage.

En particulier, si chaque sous-ensemble d'éléments codés poinçonnés comprend d'une part des éléments d'information (systématiques) et d'autre part des éléments de redondance obtenus à partir de ces éléments d'information, la première étape d'entrelacement met en oeuvre au moins un premier motif d'entrelacement pour l'entrelacement des éléments d'information du premier sous-ensemble d'éléments codés poinçonnés, et un deuxième motif d'entrelacement pour l'entrelacement d'éléments de redondance du premier sous-ensemble d'éléments codés poinçonnés, et la deuxième étape d'entrelacement met en oeuvre au moins un premier motif d'entrelacement pour l'entrelacement des éléments d'information du deuxième sous-ensemble d'éléments codés poinçonnés, et un deuxième motif d'entrelacement pour l'entrelacement des éléments de redondance du deuxième sous-ensemble d'éléments codés poinçonnés.

Les différents entrelaceurs utilisés peuvent être identiques ou différents. Par exemple, on peut utiliser un même entrelaceur aléatoire pour l'entrelacement des éléments d'information et pour l'entrelacement des éléments de redondance pour chaque sous-ensemble d'éléments codés poinçonnés.

Selon un mode de réalisation, l'étape de génération du bloc de symboles multiporteuses tient compte d'au moins une interférence affectant au moins une porteuse du signal multiporteuse.

Plus précisément, l'invention selon ce mode de réalisation permet d'optimiser le mappage temps-fréquence des symboles complexes sur les porteuses du bloc de symboles multiporteuses, en affectant à certains symboles complexes des positions moins soumises aux interférences (par exemple aux symboles complexes construits à partir d'éléments d'information) et à d'autres symboles complexes des positions plus soumises aux interférences (par exemple aux symboles complexes construits à partir d'éléments de redondance).

En particulier, l'étape de génération du bloc de symboles multiporteuses met en oeuvre les sous-étapes suivantes, pour au moins une porteuse du bloc de symboles multiporteuses :

- détermination d'une puissance d'interférence affectant la porteuse sur $N_\tau$ positions consécutives en temps ;
- classement des $N_\tau$ positions selon ladite puissance d'interférence ;
- mappage temps-fréquence des symboles complexes construits à partir des éléments d'information du premier sous-ensemble d'éléments codés poinçonnés vers les positions associées à une puissance d'interférence inférieure ou égale à un seuil prédéterminé, et des symboles complexes construits à partir d'éléments de redondance du premier sous-ensemble d'éléments codés poinçonnés, obtenus à partir de ces éléments d'information, vers les positions associées à une puissance d'interférence supérieure au seuil prédéterminé, et
- mappage temps-fréquence des symboles complexes construits à partir des éléments d'information du deuxième sous-ensemble d'éléments codés poinçonnés vers les positions associées à une puissance d'interférence inférieure ou égale à un seuil prédéterminé, et des symboles complexes construits à partir d'éléments de redondance du deuxième sous-ensemble d'éléments codés poinçonnés, obtenus à partir des éléments d'information, vers les positions associées à une puissance d'interférence supérieure au seuil prédéterminé.

Selon ce mode de réalisation, il est ainsi possible de mapper les éléments d'information (systématique), ou plus précisément les symboles complexes obtenus à partir de ces éléments d'information, vers les porteuses aux positions de l'espace temps-fréquence les moins affectées par les interférences.

En particulier, le nombre de positions $N_\tau$ dépend du facteur de compression $\tau$ défini pour une transmission à une cadence supérieure à la cadence de Nyquist.

Ainsi, en notant $N_{mp}$ le nombre de symboles multiporteuses dans un bloc, on a :

$$N_{mp} = a * N_\tau \ (a \in \mathbb{N}).$$

On a aussi, en notant $N$ le nombre d'éléments d'information en entrée de l'étape de codage, $M$ le nombre de fréquence porteuses à moduler, $r$ un rendement de codage global, et $mod_{ord}$ l'ordre de la modulation :

$N_{mp} = N/(r * M * \log_2(mod_{ord}))$ si l'on considère une modulation de type OFDM, ou
$N_{mp} = 2 * N/(r * M * \log_2(mod_{ord}))$ si l'on considère une modulation de type OFDM/OQAM.

En effet, si l'on se place dans le contexte d'une transmission FTN, on note que l'interférence introduite par la transmission FTN dépend de l'instant temps $n$ et est périodique. Sa période $N_\tau$ dépend du facteur de compression $\tau$ en temps (ou $N_f$ pour le signal discret, tel que $N_f = \left\lceil \tau.\frac{M}{2} \right\rceil_{arrondi}$ ).

Il est donc possible de déterminer une fois l'interférence associée à $N_\tau$ positions en temps, pour différentes fréquences, pour classer les positions selon la puissance d'interférence, puis d'utiliser ce classement pour les $N_\tau$ positions suivantes, i.e. pour la période suivante.

L'invention concerne par ailleurs un dispositif de génération d'un signal multiporteuse, tel que revendiqué dans la revendication 10.

Un tel dispositif de génération d'un signal multiporteuse est notamment adapté à mettre en oeuvre le procédé de génération décrit précédemment. Il s'agit par exemple d'un émetteur d'une station de base d'un réseau cellulaire pour une communication sur voie descendante, ou d'un émetteur d'un terminal de type ordinateur, téléphone, tablette, boîtier décodeur (en anglais « set-top box »), etc., pour une communication sur voie montante. Ce dispositif pourra bien sûr comporter les différentes caractéristiques relatives au procédé de génération selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne encore un ou plusieurs programmes d'ordinateur comportant des instructions pour la mise en oeuvre d'un procédé de génération d'un signal multiporteuse tel que décrit ci-dessus lorsque ce ou ces programmes sont exécutés par au moins un processeur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1 et 2 illustrent les principales étapes mises en oeuvre par un procédé de génération d'un signal multiporteuse selon un mode de réalisation particulier de l'invention, avec ou sans pré-codage ;
- les figures 3 et 4 présentent une technique d'optimisation de l'étape de mappage temps-fréquence ;
- les figures 5 et 6 illustrent les principales étapes mises en oeuvre par un procédé de génération d'un signal multiporteuse selon un mode de réalisation particulier de l'invention, mettant en oeuvre la technique d'optimisation de l'étape de mappage temps-fréquence, avec ou sans pré-codage ;
- la figure 7 présente la structure simplifiée d'un dispositif mettant en oeuvre une technique de génération d'un signal multiporteuse selon un mode de réalisation de l'invention.

## 5. Description d'un mode de réalisation de l'invention

Le principe général de l'invention repose sur le traitement séparé de deux sous-ensembles d'éléments codés, obtenus par codage d'un ensemble d'éléments d'information, jusqu'à l'opération de mappage des éléments codés sur des symboles complexes.

En particulier, un tel traitement séparé permet de mettre en oeuvre un poinçonnage distinct sur chaque sous-ensemble d'éléments codés, permettant d'offrir un degré de protection différent, en terme de codage, aux différents sous-ensembles.

Selon un mode de réalisation, l'invention propose également d'optimiser le mappage temps-fréquence des symboles complexes. Selon un exemple de mise en oeuvre particulier, la solution proposée permet de garantir que les symboles complexes construits à partir de bits d'information (bits systématiques) sont mappés vers des porteuses placées aux positions de l'espace temps-fréquence les moins affectées par l'interférence.

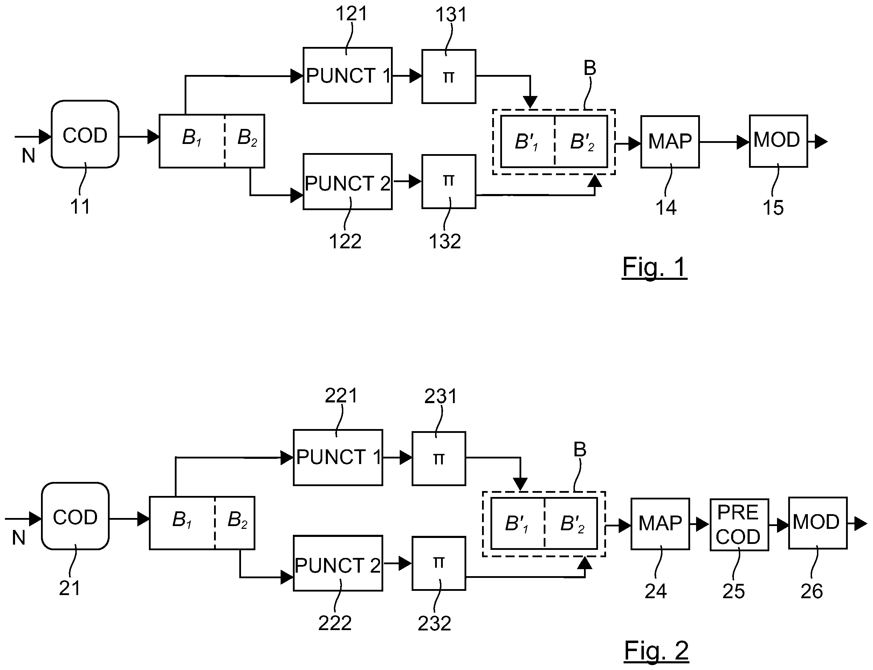

La figure 1 illustre les principales étapes mises en oeuvre par un procédé de génération d'un signal multiporteuse selon un mode de réalisation de l'invention.

Selon cette figure 1, pour la génération d'au moins un bloc de symboles multiporteuses, un tel procédé met en oeuvre une étape de codage 11 d'un ensemble d'éléments d'information, par exemple de taille $N$, délivrant un ensemble d'éléments codés, par exemple de taille $B'$.

Une telle étape de codage met par exemple en oeuvre un codage de canal, qui peut être de type systématique ou non systématique. Elle permet par exemple de générer $(B' - N)$ éléments de redondance, à partir des $N$ éléments d'information, pour compenser le bruit sur le canal de transmission. Le rendement $r'$ de l'étape de codage 11 est tel que $B' = N/r'$.

Si le nombre d'éléments codés utilisés pour former des symboles complexes (symboles q-aires) est fixé à $B$, un poinçonnage est mis en oeuvre après l'étape de codage 11 pour assurer un rendement global de codage $r$ tel que $B = N/r$.

Ainsi, en notant M le nombre de porteuses à moduler et $mod_{ord}$ l'ordre de la modulation, le nombre de symboles multiporteuses dans un bloc est :

$$N_{mp} = N/(r * M * \log_2(mod_{ord})) \text{ si l'on considère une modulation ODFM, ou}$$
$$N_{mp} = 2 * N/(r * M * \log_2(mod_{ord})) \text{ si l'on considère une modulation ODFM/OQAM.}$$

Selon l'invention, on propose d'appliquer un rendement différent à certains éléments d'information, de façon à augmenter ou diminuer le niveau de protection de ces éléments d'information obtenu grâce au codage. Ainsi, on cherche à appliquer un rendement $r_1$ à un premier sous-ensemble d'éléments d'information de taille $N_1$, de façon à obtenir un premier sous-ensemble d'éléments codés poinçonnés de taille $B'_1$, et un rendement $r_2$ à un deuxième sous-ensemble d'éléments d'information de taille $N_2$, de façon à obtenir un deuxième sous-ensemble d'éléments codés poinçonnés de taille $B'_2$, avec $N_1 + N_2 = N$ et $B = B'_1 + B'_2$. Pour ce faire, on peut utiliser des motifs de poinçonnage différents pour le premier sous-ensemble d'éléments codés et pour le deuxième sous-ensemble d'éléments codés.

Plus précisément, on applique un poinçonnage 121 à un premier sous-ensemble d'éléments codés de l'ensemble d'éléments codés, de taille $B_1$, obtenus à partir du premier sous-ensemble d'éléments d'information de taille $N_1$ : $B_1 = N_1/r'$. On obtient ainsi un premier sous-ensemble de $B'_1$ éléments codés poinçonnés selon un premier motif de poinçonnage. Le rendement de codage associé aux étapes de codage 11 et de poinçonnage 121 est tel que $B'_1 = N_1/r_1$. Au cours d'une étape suivante 131, les $B'_1$ éléments codés poinçonnés du premier sous-ensemble peuvent être entrelacés, par exemple en utilisant une première fonction d'entrelacement aléatoire.

On applique également un poinçonnage 122 à un deuxième sous-ensemble d'éléments codés de l'ensemble d'éléments codés, de taille $B_2$, avec $B_1 + B_2 = B'$, obtenus à partir du deuxième sous-ensemble d'éléments d'information de taille $N_2$ : $B_2 = N_2/r'$. On obtient ainsi un deuxième sous-ensemble de $B'_2$ éléments codés poinçonnés selon un deuxième motif de poinçonnage, qui peut être distinct du premier motif de poinçonnage. En particulier, si $r_1 \neq r_2$, les premier et deuxième motifs de poinçonnage sont différents. Si $r_1 = r_2$, les premier et deuxième motifs de poinçonnage peuvent être différents ou identiques. Le rendement de codage associé aux étapes de codage 11 et de poinçonnage 122 est tel que $B'_2 = N_2/r_2$. Au cours d'une étape suivante 132, les $B'_2$ éléments codés poinçonnés du deuxième sous-ensemble peuvent être entrelacés, par exemple en utilisant une deuxième fonction d'entrelacement aléatoire, qui peut être identique ou distincte de la première fonction d'entrelacement.

A l'issue de ces étapes de codage 11, poinçonnage 121 et 122, entrelacement éventuel 131 et 132, on obtient

$$r = \frac{r_1 B'_1}{B} + \frac{r_2 B'_2}{B}$$

$B$ éléments codés poinçonnés, avec $B = B'_1 + B'_2$, et un rendement global .

Ces $B$ éléments codés poinçonnés sont convertis en au moins un symbole complexe, au cours d'une étape de mappage 14, en utilisant par exemple la technique de Gray.

Au cours d'une étape suivante, un bloc de symboles multiporteuses « à transmettre » est généré à partir des symboles complexes.

Comme indiqué ci-dessus, on propose d'appliquer un rendement différent à certains éléments d'information, de façon à augmenter ou diminuer le niveau de protection de ces éléments d'information obtenu grâce au codage. Par exemple, si on choisit $r_1 \leq r \leq r_2$, le premier sous-ensemble d'éléments d'information bénéficie d'une meilleure protection (code fort) que le deuxième sous-ensemble d'éléments d'information (code faible). Si on choisit $r_2 \leq r \leq r_1$, le deuxième sous-ensemble d'éléments d'information bénéficie d'une meilleure protection (code fort) que le premier sous-ensemble d'éléments d'information (code faible). Si on choisit $r_1 = r_2 = r$, les éléments du premier sous-ensemble et du deuxième sous-ensemble d'éléments d'information bénéficient d'une protection similaire.

A titre d'exemple, on considère que les éléments d'information sont des bits d'information.

Si la taille de l'ensemble des bits d'information en entrée de l'étape de codage 11 est $N$, que cette étape de codage met en oeuvre un code mère de rendement $r' = 1/4$, et que la taille de l'ensemble des bits codés choisie pour former les symboles complexes est $B = 2 * N$, alors le rendement de code « global » considéré (entre l'entrée de l'étape de codage 11 et l'entrée de l'étape de mappage 14) est $r = 1/2$.

On choisit par exemple un premier rendement de code $r_1 = 8/17$ à appliquer au premier sous-ensemble d'éléments d'information, et un deuxième rendement de code $r_2 = 9/17$ à appliquer au deuxième sous-ensemble d'éléments d'information.

Si l'on considère que la moitié des bits codés pour former les symboles complexes appartient au premier sous-ensemble d'éléments codés poinçonnés, et que l'autre moitié des bits codés pour former les symboles complexes appartient au deuxième sous-ensemble d'éléments codés poinçonnés, i.e. $B'_1 = B'_2 = B/2$, alors on peut définir $N_1$ et $N_2$ comme suit, à partir de $B'_1 = \frac{N_1}{r_1} = \frac{B}{2}$ et $B'_2 = \frac{N_2}{r_2} = \frac{B}{2}$ :

$$N_1 = \frac{B \times r_1}{2} = 2 \times N \times \frac{r_1}{2} = N \times r_1 = \frac{8N}{17}$$

$$N_2 = \frac{B \times r_2}{2} = 2 \times N \times \frac{r_2}{2} = N \times r_2 = \frac{9N}{17}$$

En entrée de l'étape de codage 11, on peut donc considérer un premier sous-ensemble de $N_1 = \frac{8N}{17}$ bits d'information et un deuxième sous-ensemble de $N_2 = \frac{9N}{17}$ bits d'information.

A l'issue de l'étape de codage 11, on obtient un premier sous-ensemble de $B_1$ bits codés, formé à partir des $N_r$ bits d'information du premier sous-ensemble, et un deuxième sous-ensemble de $B_2$ bits codés, formé à partir des $N_2$ bits d'information du deuxième sous-ensemble, tels que :

$$B_1 = \frac{N_1}{r'} = \frac{8N}{17} \times 4 = \frac{32N}{17}$$

$$B_2 = \frac{N_2}{r'} = \frac{9N}{17} \times 4 = \frac{36N}{17}$$

On obtient ainsi, à l'issue de l'étape de poinçonnage 121 appliquée au premier sous-ensemble de $B_1$ bits codés, et après l'éventuelle étape d'entrelacement 131, le premier sous-ensemble de bits codés poinçonnés de taille $B'_1 = B/2$.

On obtient également, à l'issue de l'étape de poinçonnage 122 appliquée au deuxième sous-ensemble de $B_2$ bits codés, et après l'éventuelle étape d'entrelacement 132, le deuxième sous-ensemble de bits codés poinçonnés de taille $B'_2 = B/2$.

Par exemple, si l'on considère un code systématique de rendement global $r = 1/2$, des premier et deuxième rendements tels que $r_1 = \frac{8}{17} \leq r = \frac{1}{2} \leq r_2 = \frac{9}{17}$, et si l'on ne poinçonne que des bits de redondance, alors le sous-ensemble de bits codés le moins poinçonné (i.e. $B'_1$) a plus de bits de redondance que de bits de systématiques. Le sous-ensemble de bits codés le plus poinçonné (i.e. $B'_2$) a plus de bits systématiques que de bits de redondance.

Eventuellement, comme illustré en figure 2, une étape de pré-codage des symboles complexes peut être mise en oeuvre entre les étapes de mappage et de modulation.

Ainsi, selon le mode de réalisation illustré en figure 2, on peut pré-coder au moins un symbole complexe modulant une porteuse d'un signal multiporteuse, en modifiant sa valeur pour prendre en compte, à l'émission, une interférence entre symboles $ISI$ et/ou entre porteuses $ICI_n$ affectant normalement ce symbole complexe. L'invention, selon ce mode de réalisation, propose ainsi de pré-annuler au moins partiellement une interférence entre symboles multiporteuses et/ou entre porteuses pour au moins un symbole complexe.

Une telle technique peut en particulier être mise en oeuvre pour une transmission des données à une cadence supérieure à la cadence de Nyquist, pour une modulation de type OFDM ou OFDM/OQAM.

On propose selon ce mode de réalisation de pré-annuler au moins partiellement, à l'émission, les interférences $ISI$ et $ICI_n$, puisqu'elles sont connues par l'émetteur. Ainsi, au lieu de transmettre des symboles complexes $a_{m,n}$, on peut transmettre des symboles pré-codés $c_{m,n}$ tels que :

$$c_{m,n} = a_{m,n} - \alpha ISI - \beta ICI_n$$

On note tout d'abord que pour un symbole complexe $a_{m,n}$, les symboles complexes $a_{m,n+p}$ et $a_{m,n-p}$ participent aux $ISI$, et les symboles complexes $a_{m+q,n}$ et $a_{m-q,n}$ participent aux $ICI$, avec $p, q \in \Re^+$, $p \in [-l,l]$ et $q \in [-l',l']$. On ne peut donc pas pré-coder l'ensemble des symboles complexes, i.e. pré-annuler les interférences de tous les symboles complexes.

Les valeurs de $l$ et $l'$ peuvent être déterminées à partir d'au moins un élément appartenant au groupe comprenant : la longueur du filtre prototype utilisé, le facteur de compression $\tau$ et le type de modulation.

Afin de limiter la diminution de la puissance du symbole complexe utile $a_{m,n}$, on introduit deux facteurs $\alpha$ et $\beta$ permettant de sélectionner le type d'interférence que l'on souhaite annuler au moins partiellement grâce au pré-codage, et on transmet un premier sous-ensemble de symboles complexes pré-codés $c_{m,n} = a_{m,n} - \alpha ISI - \beta ICI_n$ sur une première partie de la trame. Sur le reste de la trame, on transmet un deuxième sous-ensemble de symboles complexes non pré-codés $a_{m,n}$.

Cette technique de pré-annulation au moins partielle d'interférence peut être nommée technique de pré-codage SIPC, en anglais « Sparse interférence Pre-Cancellation », et est notamment présentée dans le document « Sparse interférence Pre-Cancellation for FTN-OQAM Systems » (Naila Lahbabi et al., « 22nd European Wireless Conférence », 18-20 mai 2016, Oulu, Finlande).

Selon la figure 2, les étapes de codage 21, poinçonnage 221, poinçonnage 222, entrelacement 231, entrelacement 232, et mappage 24 sont similaires aux étapes de codage 11, poinçonnage 121, poinçonnage 122, entrelacement 131, entrelacement 132, et mappage 14.

L'étape de pré-codage 25 pré-code quant à elle un premier sous-ensemble de symboles complexes, parmi l'ensemble des symboles complexes obtenus à partir de l'ensemble de N éléments d'information. On obtient ainsi un premier sous-ensemble de K symboles pré-codés. Cette étape de pré-codage 25 modifie la valeur d'un symbole complexe du premier sous-ensemble pour tenir compte d'une interférence générée par au moins un autre symbole complexe destiné à être transmis au même instant ou à une même fréquence selon un motif de transmission temps-fréquence prédéterminé.

L'étape de modulation 26 module ensuite les porteuses du ou des symboles multiporteuses soit par un symbole complexe pré-codé du premier sous-ensemble de symboles complexes, soit par un symbole complexe non pré-codé d'un deuxième sous-ensemble de symboles complexes, selon le motif de transmission prédéterminé.

En particulier, selon ce mode de réalisation, les éléments codés poinçonnés utilisés pour construire les symboles complexes destinés à être pré-codés au cours de l'étape de pré-codage 25 appartiennent au premier sous-ensemble d'éléments codés poinçonnés, $B'_1$, et les éléments codés poinçonnés utilisés pour construire les symboles complexes non-destinés à être pré-codés au cours de l'étape de pré-codage 25 appartiennent au deuxième sous-ensemble d'éléments codés poinçonnés, $B'_2$.

Par exemple, on souhaite que la moitié des symboles complexes à transmettre soit pré-codée, et l'autre moitié soit non pré-codée. On propose ainsi, selon ce mode de réalisation d'utiliser des rendements de code distincts pour le codage des éléments d'information destinés à former des symboles complexes destinés à être pré-codés, et pour le codage des éléments d'information destinés à former des symboles complexes destinés à être non pré-codés. En d'autres termes, on peut définir un rendement de code $r_1$ à appliquer au premier sous-ensemble d'éléments d'information, permettant de générer les symboles complexes destinés à être pré-codés, et un rendement de code $r_2$ à appliquer au deuxième sous-ensemble d'éléments d'information, permettant de générer les symboles complexes non destinés à être pré-codés.

Comme décrit précédemment avec la figure 1, si on choisit $r_1 \leq r \leq r_2$, le premier sous-ensemble d'éléments d'information, utilisé pour générer les symboles pré-codés, bénéficie d'une meilleure protection (code fort) que le deuxième sous-ensemble d'éléments d'information, utilisé pour générer les symboles non pré-codés (code faible). Si on choisit $r_2 \leq r \leq r_1$, le deuxième sous-ensemble d'éléments d'information, utilisé pour générer les symboles non pré-codés, bénéficie d'une meilleure protection (code fort) que le premier sous-ensemble d'éléments d'information, utilisé pour générer les symboles pré-codés (code faible). Si on choisit $r_1 = r_2 = r$, les éléments du premier sous-ensemble et du deuxième sous-ensemble d'éléments d'information bénéficient d'une protection similaire.

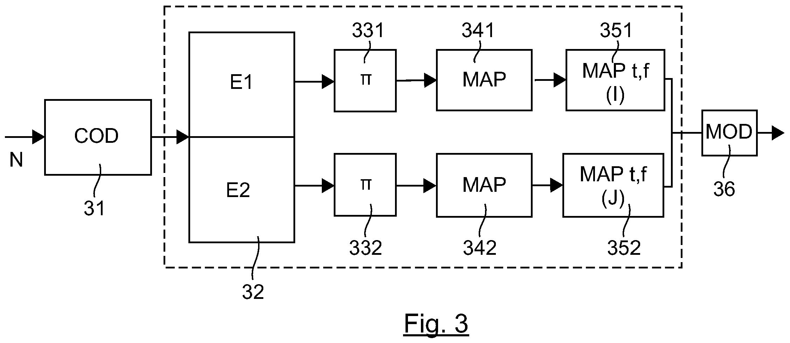

On présente désormais, en relation avec la figure 3, une variante permettant d'optimiser le mappage des symboles complexes sur les porteuses dans l'espace temps-fréquence. Une telle variante permet d'améliorer encore la transmission d'un signal multiporteuse, en atténuant les interférences affectant certains symboles lors de la transmission du signal multiporteuse.

Par souci de simplification, on présente tout d'abord la mise en oeuvre d'une telle technique d'optimisation du mappage des symboles complexes sur les porteuses non combinée à la technique de génération d'un signal multiporteuse décrite en relation avec les figures 1 et 2.

Selon cette technique, illustrée en figure 3, on applique une étape de codage 31 à un ensemble d'éléments d'information, par exemple de taille $N$, délivrant un ensemble d'éléments codés, par exemple de taille $B$.

Une telle étape de codage met par exemple en oeuvre un codage de canal, qui peut être de type systématique ou non systématique. Elle permet par exemple de générer $(B - N)$ éléments de redondance, à partir des $N$ éléments d'information, pour compenser le bruit sur le canal de transmission.

Les éléments codés sont ensuite séparés (32) en deux sous-ensembles : un premier sous-ensemble d'éléments codés, noté E1, et un deuxième sous-ensemble d'éléments codés, noté E2, et chaque sous-ensemble est traité séparément.

Par exemple, si l'étape de codage 31 met en oeuvre un code systématique, le premier sous-ensemble d'éléments codés E1 peut être formé par les $N$ éléments d'information (systématique) et le deuxième sous-ensemble d'éléments codés E2 par $(B - N)$ éléments de redondance obtenus à partir des $N$ éléments d'information.

Les éléments codés du premier sous-ensemble d'éléments codés E1 peuvent ensuite être entrelacés au cours d'une étape optionnelle d'entrelacement 331, puis convertis en au moins un symbole complexe, au cours d'une étape de mappage 341. Le ou les symboles complexes ainsi obtenus sont ensuite mappés vers les porteuses du signal multiporteuse, au cours d'une étape de mappage temps-fréquence 351. On obtient ainsi au moins un symbole multiporteuse.

De façon similaire, les éléments codés du deuxième sous-ensemble d'éléments codés E2 peuvent ensuite être entrelacés au cours d'une étape optionnelle d'entrelacement 332, puis convertis en au moins un symbole complexe, au cours d'une étape de mappage 342. Le ou les symboles complexes ainsi obtenus sont ensuite mappés vers les porteuses du signal multiporteuse, au cours d'une étape de mappage temps-fréquence 352. On obtient ainsi au moins un symbole multiporteuse.

Au cours d'une étape de modulation 36, le ou les symboles multiporteuses ainsi construits sont transmis.

Eventuellement, une étape de pré-codage des symboles complexes peut être mise en oeuvre avant l'étape de modulation 36, par exemple selon la technique de pré-codage SIPC introduite précédemment.

Plus précisément, selon l'exemple illustré en figure 3, on propose une technique permettant de choisir la position de la porteuse « mappée » avec un symbole complexe au cours de l'étape de mappage temps-fréquence. On sépare ainsi les éléments codés obtenus en sortie de l'étape de codage 31, pour affecter des porteuses soumises à un premier type d'interférence aux symboles complexes obtenus à partir des éléments codés du premier sous-ensemble d'éléments codés (par exemple interférence inférieures à un seuil prédéterminé), et des porteuses soumises à un deuxième type d'interférence aux symboles complexes obtenus à partir des éléments codés du deuxième sous-ensemble d'éléments codés (par exemple interférence supérieures ou égales à un seuil prédéterminé).

Par exemple, si le premier sous-ensemble d'éléments codés E1 comprend $N$ éléments d'information (systématique) et le deuxième sous-ensemble d'éléments codés E2 $(B - N)$ éléments de redondance (parité) obtenus à partir des $N$ éléments d'information, alors un symbole complexe obtenu à partir d'un élément d'information du premier sous-ensemble d'éléments codés E1 peut être mappé sur une position faiblement impactée par les interférences, alors qu'un symbole complexe obtenu à partir d'un élément de redondance du deuxième sous-ensemble d'éléments codés E2 peut être mappé sur une position plus fortement impactée par les interférences. A l'inverse, un symbole complexe obtenu à partir d'un élément d'information du premier sous-ensemble d'éléments codés E1 peut être mappé sur une position fortement impactée par les interférences, si un symbole complexe obtenu à partir d'un élément de redondance du deuxième sous-ensemble d'éléments codés E2 peut être mappé sur une position plus faiblement impactée par les interférences.

On propose ainsi selon cette technique d'optimiser l'étape de mappage temps-fréquence.

On décrit ci-après un exemple d'application de cette technique d'optimisation du mappage temps-fréquence, pour une modulation de type FTN/OQAM, et un codage systématique de N bits d'information.

Comme indiqué en relation avec l'art antérieur, la transmission FTN permet de réduire le temps de transmission pour un volume d'information donné pour des systèmes de transmission multiporteuses, mais génère en contrepartie de fortes interférences. En particulier, si les bits systématiques et de redondance (parité) d'un même mot de code sont mappés vers les positions les plus impactées par l'interférence, la décision du décodeur sur ce mot de code à la réception sera mauvaise.

On propose ainsi selon cet exemple de contrôler/optimiser l'étape de mappage temps-fréquence des symboles afin d'assurer que si un bit de redondance est mappé vers une position fortement impactée par l'interférence, le bit systématique correspondant (à partir duquel est déterminé le bit de redondance) sera mappé vers une position faiblement affectée par l'interférence, et vice versa.

Pour ce faire, on rappelle que le signal en sortie du modulateur FTN/OQAM s'écrit :

$$s[k] = \sum_{n=0}^{\infty} g[k - nN_f] * \sum_{m=0}^{M-1} a_{m,n} e^{j\Phi_{m,n}} e^{j2\pi m\left(nN_f - \frac{D}{2}\right)} e^{\frac{j2\pi m(k - nN_f)}{M}}$$

avec :

$g$ la forme d'onde utilisée ;

$M$ le nombre de porteuses ;

$$N_f = \left[\tau . \frac{M}{2}\right]_{\text{arrondi}}$$
, avec $\tau$ le facteur de compression ;

$L$ la longueur du filtre prototype $g$ ;

$D = L - 1$ un paramètre de retard introduit pour rendre le système causal ;

$a_{m,n}$ les symboles à transmettre, à valeurs réelles pour une modulation OQAM ;

$\Phi_{m,n}$ un terme de phase de la modulation FTN/OQAM, qui peut être égal à $\Phi_{m,n} = \dfrac{\pi}{2}(m + n)$

On note que l'interférence introduite par la transmission FTN dépend de l'instant temps $n$ et est périodique. Sa période dépend du facteur de compression $\tau$ (ou $N_f$ pour le signal discret). On note $N_\tau$ la période correspondant à un facteur de compression $\tau$. Ainsi, en notant $N_{mp}$ le nombre de symboles multiporteuses dans un bloc, on a :

$$N_{mp} = a * N_\tau \ \ (a \in \mathbb{N}).$$

En particulier, on a :

$$N_\tau = \begin{cases} \dfrac{M}{2N_f} \ si \ mod(M, 2N_f) = 0 \\ \dfrac{M}{\gcd(M, 2N_f)} \ si \ mod(M, 2N_f) \neq 0 \end{cases}$$

Pour une fréquence donnée $m$, $m \in \{1, ...,M\}$, on calcule la puissance de l'interférence qui impacte les premières $N_\tau$ positions en temps dans l'espace temps-fréquence.

On peut ainsi, selon cette technique, classer ces $N_\tau$ positions sont selon un ordre croissant de cette puissance d'interférence, pour choisir vers quelle position de l'espace temps-fréquence on peut mapper un symbole complexe :

$$n_1 < \cdots < n_{N_\tau} \text{ tel que } P_{n_1} < \cdots < P_{N_\tau} .$$

avec $P_{ni}$ : la puissance d'interférence à une position $n_i$ parmi les $N_\tau$ positions en temps.

On note que, dans le cas de FTN, l'interférence ne dépend pas de la position en fréquence. Le calcul et le classement de la puissance de l'interférence peut donc être mis en oeuvre une fois pour $N_\tau$ positions, et le résultat trouvé peut s'appliquer directement pour les autres positions en temps (de la même porteuse) et les autres porteuses.

Sinon, on procède de façon similaire pour les $N_\tau$ positions en temps dans l'espace temps-fréquence pour la fréquence $m$, et pour les autres fréquences.

En revenant à la figure 3 et selon cet exemple, à l'issue de l'étape de codage 31, on obtient un premier sous-ensemble d'éléments codés, ou bloc E1, comprenant les bits systématiques, et un deuxième sous-ensemble d'éléments codés, ou bloc E2, comprenant les bits de parité (redondance). Par exemple, on considère un rendement de codage égal à ½. Les blocs E1 et E2 présentent donc une taille identique.

Chaque bloc peut être entrelacé séparément (331, 332). En particulier, les fonctions d'entrelacement mises en oeuvre pour l'entrelacement du bloc E1 (331) et du bloc E2 (332) peuvent être identiques ou distinctes. Il s'agit par exemple d'entrelacements aléatoires.

Au cours de l'étape de mappage binaire / q-aire 341, on construit un bloc $E'_1$ de symboles QAM à partir du bloc $E_1$ de bits systématiques, en utilisant par exemple la technique de mappage de Gray.

Au cours de l'étape de mappage binaire / M-aire 342, on construit un bloc $E'_2$ de symboles QAM à partir du bloc $E_2$ de bits de parité, en utilisant par exemple la technique de mappage de Gray.

Au cours de l'étape de mappage temps-fréquence 351, le bloc $E'_1$ de symboles QAM, construits à partir du bloc $E_1$ de bits systématiques, est mappé vers les $\dfrac{N_\tau}{2}$ premières positions parmi les positions $n_l < \cdots < n_h$, qui correspondent aux positions faiblement impactées par l'interférence. Soit $I$ l'ensemble de ces positions.

Au cours de l'étape de mappage temps-fréquence 352, le bloc $E'_2$ de symboles QAM, construits à partir du

bloc $E_2$ de bits de parité, est mappé vers les $\frac{N_\tau}{2}$ dernières positions parmi les positions $n_l < \cdots < n_h$, qui correspondent aux positions fortement impactées par l'interférence. Soit $J$ l'ensemble de ces positions.

Par exemple, si on considère un facteur de compression $\tau = 0.8$, la période des interférences est $N_\tau = 16$.

Pour chaque porteuse, l'ordre des 16 positions en temps selon la puissance d'interférence est tel que :

| $n_1$ | $n_6$ | $n_{12}$ | $n_{11}$ | $n_7$ | $n_{16}$ | $n_2$ | $n_5$ | $n_{13}$ | $n_{10}$ | $n_8$ | $n_{15}$ | $n_3$ | $n_4$ | $n_{14}$ | $n_9$ |
|---|---|---|---|---|---|---|---|---|---|---|---|---|---|---|---|

Les symboles QAM construits à partir des bits systématiques sont mappés vers les positions de l'ensemble $I$, défini par : $I = \{n_1, n_6, n_{12}, n_{11}, n_7, n_{16}, n_2, n_5\}$, correspondant aux positions les moins affectées par l'interférence.

Les symboles QAM construits à partir des bits de parité sont mappés vers les positions de l'ensemble $J$, défini par : $J = \{n_9, n_{14}, n_4, n_3, n_{15}, n_8, n_{10}, n_{13}\}$, correspondant aux positions les plus affectées par l'interférence.

En particulier, si l'on considère un code systématique et un rendement global $r = 1/2$, alors si le symbole QAM généré à partir d'un bit d'information est mappé vers la position $n_1$ présentant la puissance d'interférence la plus faible, le symbole QAM généré à partir du bit de parité correspondant à ce bit d'information peut être mappé vers la position $n_9$ présentant la puissance d'interférence la plus forte. Si le symbole QAM généré à partir d'un bit d'information est mappé vers la position $n_6$ présentant la deuxième puissance d'interférence la plus faible, le symbole QAM généré à partir du bit de parité correspondant à ce bit d'information peut être mappé vers la position $n_{14}$ présentant la deuxième puissance d'interférence la plus forte, etc.

Si l'on considère un code systématique et un rendement global $r = 1/3$, les bits systématiques peuvent être placés sur les 1/3 positions les moins affectées par l'interférence et les bits de redondance placés sur les 2/3 positions les plus affectées par l'interférence.

Pour un code non systématique, on peut appliquer un traitement similaire. Par exemple, si l'on considère un code non systématique et un rendement global $r = 1/2$, on peut mettre en oeuvre une séparation des bits de redondance, pour distribuer dans deux groupes distincts les deux bits de redondance obtenus à partir du même bit d'information. On traite ensuite chaque groupe séparément : on entrelace les bits du premier groupe (respectivement du deuxième groupe), et on construit des symboles complexes à partir des bits entrelacés du premier groupe (respectivement du deuxième groupe). On mappe ensuite les symboles complexes obtenus à partir des bits entrelacés du premier groupe vers les positions les moins affectées par l'interférence, et les symboles complexes obtenus à partir des bits entrelacés du deuxième groupe vers les positions les plus affectées par l'interférence.

On procède de la même manière pour les autres positions de la porteuse $m$, et pour les autres porteuses (i.e les autres fréquences).

On obtient à l'issue de ces étapes un signal multiporteuse à transmettre.

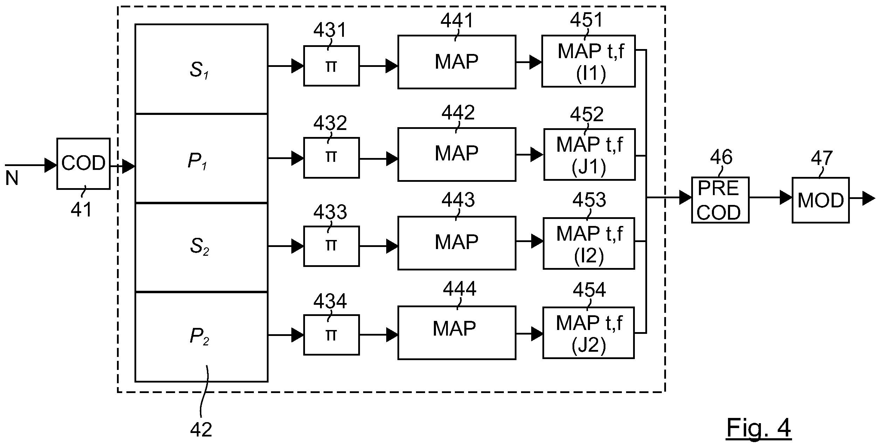

La figure 4 illustre la mise en oeuvre d'une telle technique d'optimisation du mappage temps-fréquence, combinée au pré-codage des symboles complexes.

Plus précisément, selon la figure 4, on applique une étape de codage 41 à un ensemble d'éléments d'information, par exemple de taille $N$, délivrant un ensemble d'éléments codés, par exemple de taille $B$. Les éléments codés sont ensuite séparés (42) en sous-ensembles.

Si le code mis en oeuvre au cours de l'étape de codage 41 est systématique, on considère un premier sous-ensemble d'éléments codés comprenant les bits systématiques, et un deuxième sous-ensemble d'éléments codés comprenant les bits de parité.

Les bits systématiques du premier sous-ensemble d'éléments codés peuvent être répartis en deux sous-groupes, notés $S_1$ et $S_2$. Par exemple, chaque sous-groupe comprend la moitié des bits systématiques.

Les bits de parité du deuxième sous-ensemble d'éléments codés peuvent être répartis en deux sous-groupes, notés $P_1$ et $P_2$. Par exemple, le premier sous-groupe de bits de parité $P_1$ comprend les bits de parités obtenus à partir du premier sous-groupe de bits d'information $S_1$ et le deuxième sous-groupe de bits de parité $P_2$ comprend les bits de parités obtenus à partir du deuxième sous-groupe de bits d'information $S_2$.

Chaque sous-groupe est ensuite traité séparément. Pour chaque sous-groupe, les éléments codés le composant peuvent être entrelacés au cours d'une étape optionnelle d'entrelacement (431, 432, 433, 434), puis convertis en au moins un symbole complexe, au cours d'une étape de mappage (441, 442, 443, 444). Le ou les symboles complexes ainsi obtenus sont ensuite mappés vers les porteuses du signal multiporteuse, au cours d'une étape de mappage temps-fréquence (451, 452, 453, 454). Comme déjà indiqué, les fonctions d'entrelacement mises en oeuvre pour l'entrelacement des différents sous-groupes peuvent être identiques ou distinctes. Il s'agit par exemple d'entrelacements aléatoires.

Au cours d'une étape de pré-codage 46, on pré-code une partie (premier sous-ensemble) des symboles complexes destinés à être mappés vers les porteuses du signal multiporteuse. Cette étape de pré-codage 46 modifie la valeur d'un symbole complexe du premier sous-ensemble pour tenir compte d'une interférence générée par au moins un autre symbole complexe destiné à être transmis au même instant ou à une même fréquence selon un motif de transmission temps-fréquence prédéterminé.

L'étape de modulation 47 module ensuite les porteuses du ou des symboles multiporteuses soit par un symbole complexe pré-codé, soit par un symbole complexe non pré-codé, selon le motif de transmission prédéterminé.

Par exemple, on souhaite que la moitié des symboles complexes à transmettre soit pré-codée, et l'autre moitié soit non pré-codée. Les éléments codés utilisés pour construire les symboles complexes destinés à être pré-codés au cours de l'étape de pré-codage 46 appartiennent par exemple au premier sous-ensemble d'éléments codés (comprenant le premier sous-groupe de bits d'information $S_1$ et le premier sous-groupe de bits de parité $P_1$), et les éléments codés utilisés pour construire les symboles complexes non-destinés à être pré-codés au cours de l'étape de pré-codage 46 appartiennent au deuxième sous-ensemble d'éléments codés (comprenant le deuxième sous-groupe de bits d'information $S_2$ et le deuxième sous-groupe de bits de parité $P_2$), avec selon cet exemple, $S_1 = S_2 = N/2$.

Comme indiqué précédemment, si on se place dans le contexte d'une transmission de type FTN-OQAM, l'interférence introduite par la transmission FTN dépend du temps n et est périodique, selon une période $N_\tau$. Sur une porteuse, on calcule la puissance d'interférences pour les $N_\tau$ positions temporelles associées.

Ainsi, en notant $N_{mp}$ le nombre de symboles multiporteuses à transmettre dans un bloc, on a

$$N_{mp} = a * N_\tau \ (a \in \mathbb{N})$$

.

Comme on cherche à pré-coder la moitié des symboles à transmettre, on considère que parmi ces $N_\tau$ positions temporelles, $N_{\tau 1} = \dfrac{N_\tau}{2}$ sont affectées à des symboles pré-codés, et le reste des positions, soit $N_{\tau 2} = \dfrac{N_\tau}{2}$ positions sont affectées à des symboles non pré-codés.

Comme expliqué en relation avec la figure 3, pour une fréquence donnée m, on calcule la puissance de l'interférence qui impacte les premières $N_{\tau 1}$ positions en temps dans l'espace temps-fréquence. On peut ainsi, selon cette technique, classer ces $N_{\tau 1}$ positions selon un ordre croissant de cette puissance d'interférence, pour choisir vers quelle position de l'espace temps-fréquence on peut mapper un symbole complexe destiné à être pré-codé :

$$n_1 < \cdots < n_{N_{\tau 1}} \text{ tel que } P_{n_1} < \cdots < P_{n_{N_{\tau 1}}}.$$

avec $P_{ni}$ : la puissance d'interférence à une position $n_i$ parmi les $N_{\tau 1}$ positions en temps.

Au cours de l'étape de mappage temps-fréquence 451, le bloc de symboles QAM construits à partir du premier sous-groupe de bits systématiques est mappé vers les $\dfrac{N_{\tau 1}}{2}$ premières positions parmi les positions $n_1 < \cdots < n_{N_{\tau 1}}$, qui correspondent aux positions faiblement impactées par l'interférence. Soit $I_1$ l'ensemble de ces positions.

Au cours de l'étape de mappage temps-fréquence 452, le bloc de symboles QAM construits à partir du premier sous-groupe de bits de parité est mappé vers les $\dfrac{N_{\tau 1}}{2}$ dernières positions parmi les positions $n_1 < \cdots < n_{N_{\tau 1}}$, qui correspondent aux positions fortement impactées par l'interférence. Soit $J_1$ l'ensemble de ces positions.

De façon similaire, on calcule la puissance de l'interférence qui impacte les premières $N_{\tau 2}$ positions en temps dans l'espace temps-fréquence. On peut ainsi classer ces $N_{\tau 2}$ positions selon un ordre croissant de cette puissance d'interférence, pour choisir vers quelle position de l'espace temps-fréquence on peut mapper un symbole complexe destiné à être non pré-codé.

L'ensemble $I_2$ contient les premières $\dfrac{N_{\tau 2}}{2}$ positions qui sont les moins impactées par les interférences. L'ensemble $J_2$ contient les dernières $\dfrac{N_{\tau 2}}{2}$ positions qui sont les plus impactées par l'interférence.

On considère par exemple :

- un facteur de compression $\tau$ = 0.8, donc une période des interférences $N_\tau$ = 16 ;
- que l'étape de pré-codage 46 met en oeuvre un pré-codage SIPC en temps et un motif de transmission correspondant à une alternance en temps de deux symboles pré-codés, et de deux symboles non pré-codés, et une alternance en fréquence d'un symbole pré-codé, et d'un symbole non pré-codé, pour réduire l'interférence entre symboles, et que l'on cherche à pré-coder les symboles complexes aux positions (m, n) telles que :

- m est paire et *n* = 1,2 mod 4 et
- m est impaire et *n* = 3,4 mod 4

Dans l'espace temps-fréquence, les positions des symboles pré-codés sont donc :

$$N_{\tau_1} = \{(m\ paire, n = 1,2,5,6,9,10,13,14)\ et\ (m\ impaire, n = 3,4,7,8,11,12,15,16)$$

et les positions des symboles non pré-codés sont :

$$N_{\tau_2} = \{(m\ paire, n = 3,4,7,8,11,12,15,16)\ et\ (m\ impaire, n = 1,2,5,6,9,10,13,14)\}$$

L'ordre croissant des 16 positions selon la puissance d'interférence est, comme dans l'exemple décrit en relation avec la figure 3, pour une transmission FTN-OQAM sans pré-codage :

| $n_1$ | $n_6$ | $n_{12}$ | $n_{11}$ | $n_7$ | $n_{16}$ | $n_2$ | $n_5$ | $n_{13}$ | $n_{10}$ | $n_8$ | $n_{15}$ | $n_3$ | $n_4$ | $n_{14}$ | $n_9$ |
|---|---|---|---|---|---|---|---|---|---|---|---|---|---|---|---|

Selon cet exemple, les symboles QAM construits à partir du premier sous-groupe de bits d'information $S_1$, destinés à être pré-codés, sont mappés vers les postions de l'ensemble $I_1$, défini par :

$$I_1 = \{(m\ paire, n = 1), (m\ paire, n = 6), (m\ impaire, n = 12), (m\ impaire, n$$
$$= 11), (m\ impaire, n = 7), (m\ impaire, n = 16), (m\ paire, n = 2), (m\ paire, n$$
$$= 5)\}$$

Les symboles QAM construits à partir du premier sous-groupe de bits de parité $P_1$, destinés à être pré-codés, sont mappés vers les positions de l'ensemble $J_1$, défini par :

$$J_1 = \{(m\ paire, n = 9), (m\ paire, n = 14), (m\ impaire, n = 4), (m\ impaire, n$$
$$= 3), (m\ impaire, n = 15), (m\ impaire, n = 8), (m\ paire, n = 10), (m\ paire, n$$
$$= 13)\}$$

Les symboles QAM construits à partir du deuxième sous-groupe de bits d'information $S_2$, non-destinés à être pré-codés, sont mappés vers les positions de l'ensemble $I_2$, défini par :

$$I_2 = \{(m\ impaire, n = 1), (m\ impaire, n = 6), (m\ paire, n = 12), (m\ paire, n$$
$$= 11), (m\ paire, n = 7), (m\ paire, n = 16), (m\ impaire, n = 2), (m\ impaire, n$$
$$= 5)\}$$

Les symboles QAM construits à partir du deuxième sous-groupe de bits de parité $P_2$, non-destinés à être pré-codés, sont mappés vers les positions de l'ensemble $J_2$, défini par :

$$J_2 = \{(m\ impaire, n = 9), (m\ impaire, n = 14), (m\ paire, n = 4), (m\ paire, n$$
$$= 3), (m\ paire, n = 15), (m\ paire, n = 8), (m\ impaire, n = 10), (m\ impaire, n$$
$$= 13)\}$$

En particulier, si le symbole QAM généré à partir d'un bit d'information du sous-groupe $S_1$ est mappé vers la position $n_1$ présentant la puissance d'interférence la plus faible, le symbole QAM généré à partir du bit de parité du sous-groupe $P_1$ correspondant à ce bit d'information peut être mappé vers la position $n_9$ présentant la puissance d'interférence la plus forte. Si le symbole QAM généré à partir d'un bit d'information du sous-groupe $S_1$ est mappé vers la position $n_6$ présentant la deuxième puissance d'interférence la plus faible, le symbole QAM généré à partir du bit de parité du sous-groupe $P_1$ correspondant à ce bit d'information peut être mappé vers la position $n_{14}$ présentant la deuxième puissance d'interférence la plus forte, etc.

On procède de la même manière pour les autres positions de la porteuse m, et pour les autres porteuses (i.e. les autres fréquences).

On obtient à l'issue de ces étapes au moins un bloc de symboles multiporteuses à transmettre, comprenant $N_{mp}$ symboles multiporteuses, avec :

$$N_{mp} = a * N_\tau \ (a \in \mathbb{N})$$

et

$$N_{mp} = 2 * N/(r * M * \log_2(mod_{ord}))$$

en notant $N$ le nombre d'éléments d'information en entrée de l'étape de codage, $M$ le nombre de fréquence porteuses à moduler, $r$ le rendement de codage global, et $mod_{ord}$ l'ordre de la modulation.

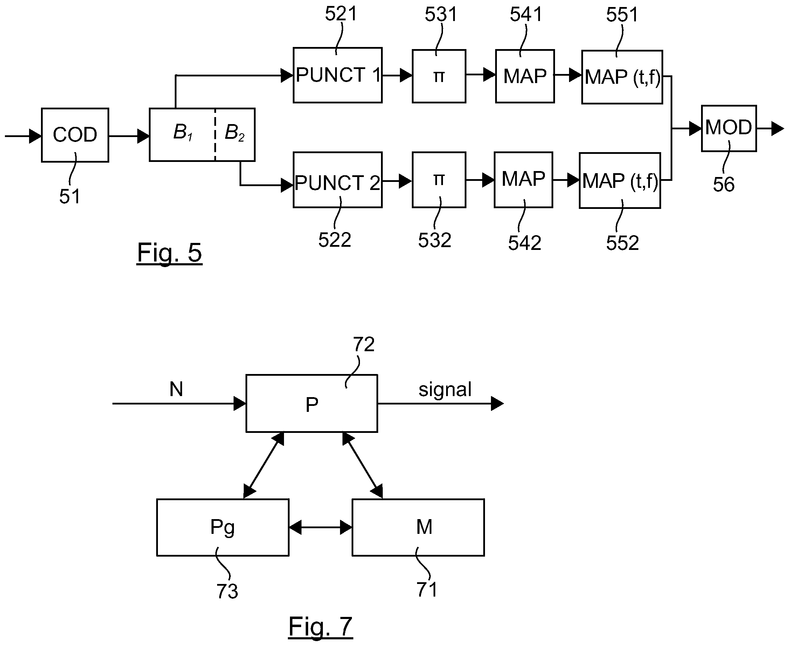

On présente désormais, en relation avec la figure 5, la technique de génération d'un signal multiporteuse selon l'invention, décrite en relation avec les figures 1 et 2, combinée à la technique permettant d'optimiser le mappage temps-fréquence, décrite en relation avec les figures 3 et 4.

Eventuellement, une étape de pré-codage des symboles complexes peut également être mise en oeuvre, avant l'étape de modulation.

Selon cette figure 5, pour la génération d'au moins un bloc de symboles multiporteuses, un tel procédé met en oeuvre une étape de codage 51 d'un ensemble d'éléments d'information, par exemple de taille $N$, délivrant un ensemble d'éléments codés, par exemple de taille $B'$. Le rendement $r'$ de l'étape de codage 51 est tel que $B' = N/r'$.

Les éléments codés sont séparés en deux sous-ensembles, dont un premier sous-ensemble de taille $B_1$ et une deuxième sous-ensemble de taille $B_2$, avec $B_1 + B_2 = B'$.

Chaque sous-ensemble d'éléments codés est traité séparément.

Comme décrit en relation avec la figure 1, on propose d'appliquer un rendement différent à certains éléments d'information, de façon à augmenter ou diminuer le niveau de protection de ces éléments d'information obtenu grâce au codage. Ainsi, on cherche à appliquer un rendement $r_1$ à un premier sous-ensemble d'éléments d'information de taille $N_1$, de façon à obtenir un premier sous-ensemble d'éléments codés poinçonnés de taille $B'_1$, et un rendement $r_2$ à un deuxième sous-ensemble d'éléments d'information de taille $N_2$, de façon à obtenir un deuxième sous-ensemble d'éléments codés poinçonnés de taille $B'_2$, avec $N_1 + N_2 = N$ et $B = B'_1 + B'_2$.

Plus précisément, le premier sous-ensemble d'éléments codés est poinçonné au cours d'une étape de poinçonnage 521. On obtient ainsi un premier sous-ensemble de $B'_1$ éléments codés poinçonnés selon un premier motif de poinçonnage. Le rendement de codage associé aux étapes de codage 51 et de poinçonnage 521 est tel que $B'_1 = N_1/r_1$. Les $B'_1$ éléments codés poinçonnés du premier sous-ensemble peuvent ensuite être entrelacés au cours d'une étape optionnelle d'entrelacement 531, par exemple en utilisant une première fonction d'entrelacement aléatoire, puis convertis en au moins un symbole complexe au cours d'une étape de mappage 541. Le ou les symboles complexes ainsi obtenus sont ensuite mappés vers les porteuses du signal multiporteuse, au cours d'une étape de mappage temps-fréquence 551, précisée ci-après.

De façon similaire, le deuxième sous-ensemble d'éléments codés est poinçonné au cours d'une étape de poinçonnage 522. On obtient ainsi un deuxième sous-ensemble de $B'_2$ éléments codés poinçonnés selon un deuxième motif de poinçonnage. Le rendement de codage associé aux étapes de codage 51 et de poinçonnage 522 est tel que $B'_2 = N_2/r_2$. Les $B'_2$ éléments codés poinçonnés du deuxième sous-ensemble peuvent ensuite être entrelacés au cours d'une étape optionnelle d'entrelacement 532, par exemple en utilisant une deuxième fonction d'entrelacement aléatoire, puis convertis en au moins un symbole complexe au cours d'une étape de mappage 542. On note que les première et deuxième fonctions d'entrelacement peuvent être différentes. Le ou les symboles complexes ainsi obtenus sont ensuite mappés vers les porteuses du signal multiporteuse, au cours d'une étape de mappage temps-fréquence 552, précisée ci-après.

En particulier, les étapes de mappage temps-fréquence 551 et 552 permettent de choisir la position de la porteuse « mappée » avec un symbole complexe. On peut ainsi affecter des porteuses soumises à un premier type d'interférence aux symboles complexes obtenus à partir des $B'_1$ éléments codés poinçonnés du premier sous-ensemble (par exemple interférence inférieures à un seuil prédéterminé), et des porteuses soumises à un deuxième type d'interférence aux symboles complexes obtenus à partir des $B'_2$ éléments codés poinçonnés du deuxième sous-ensemble (par exemple interférence supérieures ou égales à un seuil prédéterminé).

Au cours d'une étape de modulation 56, le ou les symboles multiporteuses ainsi construits sont transmis.

Eventuellement, une étape de pré-codage des symboles complexes peut être mise en oeuvre avant l'étape de modulation 56, par exemple selon la technique de pré-codage SIPC, telle que présentée dans le document « Sparse interférence Pre-Cancellation for FTN-OQAM Systems » (Naila Lahbabi et al.) précité.

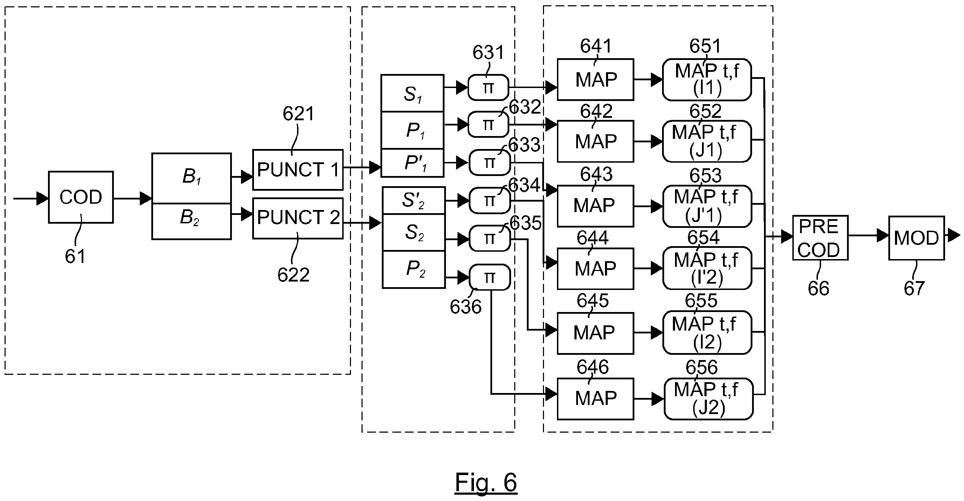

On décrit plus précisément, en relation avec la figure 6, les étapes d'entrelacement 531, 532, de mappage sur les symboles complexes 541, 542, et de mappage temps-fréquence 551, 552 de la figure 5.

Les étapes de codage 61, poinçonnage 621 du premier sous-ensemble d'éléments codés et poinçonnage 622 du deuxième sous-ensemble d'éléments codés sont similaires aux étapes de codage 51, poinçonnage 521 du premier sous-ensemble d'éléments codés et poinçonnage 522 du deuxième sous-ensemble d'éléments codés et ne sont pas décrites plus en détails.

On considère par exemple que le rendement $r_1$ associé aux étapes de codage 61 et de poinçonnage 621 du premier sous-ensemble d'éléments codés est inférieur au rendement $r_2$ associé aux étapes de codage 61 et de poinçonnage 622 du deuxième sous-ensemble d'éléments codés : $r_1 \leq r \leq r_2$.

Les éléments codés sont séparés en deux sous-ensembles, dont un premier sous-ensemble de taille $B_1$ et une deuxième sous-ensemble de taille $B_2$, avec $B_1 + B_2 = B'$. Par exemple, le code mis en oeuvre au cours de l'étape de codage 61 est systématique, et chaque sous-ensemble d'éléments codés comprend des bits d'information et les bits de parité associés à ces bits d'information.

Chaque sous-ensemble d'éléments codés est traité séparément.

A l'issue de l'étape de poinçonnage 621 du premier sous-ensemble d'éléments codés, on obtient le premier sous-ensemble de $B'_1$ éléments codés poinçonnés. Les $B'_1$ éléments codés poinçonnés peuvent être groupés en sous-groupes :

- un premier sous-groupe de bits d'information $S_1$ comprenant les bits systématiques du premier sous-ensemble de $B'_1$ éléments codés poinçonnés,
- un premier sous-groupe de bits de parité $P_1$ comprenant les bits de parité obtenus à partir du premier sous-groupe de bits d'information $S_1$,
- un sous-groupe additionnel de bits de parité $P'_1$ comprenant les bits de parité supplémentaires, puisqu'on a supposé : $r_1 \leq r$.

A l'issue de l'étape de poinçonnage 622 du deuxième sous-ensemble d'éléments codés, on obtient le deuxième sous-ensemble de $B'_2$ éléments codés poinçonnés. Les $B'_2$ éléments codés poinçonnés peuvent être groupés en sous-groupes :

- un deuxième sous-groupe de bits d'information $S_2$ comprenant les bits systématiques du deuxième sous-ensemble de $B'_2$ éléments codés poinçonnés,
- un deuxième sous-groupe de bits de parité $P_2$ comprenant les bits de parité obtenus à partir du deuxième sous-groupe de bits d'information $S_2$,
- un sous-groupe de bits d'information $S'_2$ comprenant les bits systématiques du deuxième sous-ensemble de $B'_2$ éléments codés poinçonnés les moins protégés (i.e. qui ont moins de bits de parité que les autres, puisqu'on a supposé : $r \leq r_2$).

On note que $S_1 + S_2 + S'_2 = N$

Chaque sous-groupe est ensuite traité séparément. Pour chaque sous-groupe, les éléments codés le composant peuvent être entrelacés au cours d'une étape optionnelle d'entrelacement (631, 632, 633, 634, 635, 636), puis convertis en au moins un symbole complexe, au cours d'une étape de mappage (641, 642, 643, 644, 645, 646). Le ou les symboles complexes ainsi obtenus sont ensuite mappés vers les porteuses du signal multiporteuse, au cours d'une étape de mappage temps-fréquence (651, 652, 653, 654, 655, 656). Comme déjà indiqué, les fonctions d'entrelacement mises en oeuvre pour l'entrelacement des différents sous-groupes peuvent être identiques ou distinctes. Il s'agit par exemple d'entrelacements aléatoires.

Comme indiqué précédemment, si l'on se place dans le contexte d'une transmission de type FTN-OQAM, l'interférence introduite par la transmission FTN dépend du temps n et est périodique, selon une période $N_\tau$. Sur une porteuse, on calcule la puissance d'interférences pour les $N_\tau$ positions temporelles associées et on classe les positions associées selon un ordre croissant de cette puissance d'interférence, pour choisir vers quelle position de l'espace temps-fréquence on peut mapper un symbole complexe.

Plus précisément, les symboles complexes construits à partir du premier sous-groupe de bits d'information $S_1$ sont mappés vers les positions de l'ensemble $I_1$, de taille $L_1$, correspondant par exemple aux $L_1$ positions les moins

affectées par l'interférence.

Les symboles complexes construits à partir du premier sous-groupe de bits de parité $P_1$ sont mappés vers les positions de l'ensemble $J_1$, de taille $L_1$, correspondant aux $L_1$ positions suivantes.

Les symboles complexes construits à partir du sous-groupe additionnel de bits de parité $P'_1$ sont mappés vers les positions de l'ensemble $J'_1$, de taille $L_2$, correspondant aux $L_2$ positions restantes, les plus affectées par l'interférence.

On note que $L_1 + L_1 + L_2 = N_\tau$.

De façon similaire, les symboles complexes construits à partir du sous-groupe de bits d'information $S'_2$ sont mappés vers les positions de l'ensemble $I'_1$, de taille $L_2$, correspondant par exemple aux $L_2$ positions les moins impactées par l'interférence.

Les symboles complexes construits à partir du deuxième sous-groupe de bits d'information $S_2$ sont mappés vers les positions de l'ensemble $I_2$, de taille $L_1$, correspondant aux $L_1$ positions suivantes.

Les symboles complexes construits à partir du deuxième sous-groupe de bits de parité $P_2$ sont mappés vers les positions de l'ensemble $J_2$, de taille $L_1$, correspondant aux $L_1$ positions les plus affectées par l'interférence.

A nouveau, on note que $L_1 + L_1 + L_2 = N_\tau$.

Au cours d'une étape de modulation 67, le ou les symboles multiporteuses ainsi construits sont transmis.

Eventuellement, une étape de pré-codage 66 des symboles complexes peut être mise en oeuvre avant l'étape de modulation 67, par exemple selon la technique de pré-codage SIPC, telle que présentée dans le document « Sparse interférence Pre-Cancellation for FTN-OQAM Systems » (Naila Lahbabi et al.) précité.

On donne ci-après des exemples de positions définis par les ensembles $I_1$, $I_2$, $I'_1$, $J_1$, $J_2$, $J'_1$, selon le facteur de compression et le pré-codage considérés.

On considère selon un premier exemple que l'étape de pré-codage 66 met en oeuvre un pré-codage SIPC en fréquence, selon lequel on cherche à annuler, ou à tout le moins réduire, uniquement les interférences entre porteuses ($ICI_n$), en pré-codant un premier sous-ensemble de symboles OQAM. On considère également :

- un facteur de compression $\tau = 0.8$, donc une période des interférences $N_\tau = 16$ ;
- que le motif de transmission correspond, en temps, soit à une suite de symboles pré-codés, soit à une suite de symboles non pré-codés, et, en fréquence, à une alternance d'un symbole pré-codé et d'un symbole non pré-codé.

Pour une fréquence donnée $m$, par exemple $m$ pair, correspondant à la transmission de symboles pré-codés, on calcule la puissance de l'interférence qui impacte les premières $N_\tau$ positions en temps dans l'espace temps-fréquence, et on classe ces $N_\tau$ positions selon un ordre croissant de la puissance d'interférence :

$$n_1 < \cdots < n_{N_\tau} \text{ tel que } P_{n_1} < \cdots < P_{n_{N_\tau}} .$$

avec $P_{ni}$ : la puissance d'interférence à une position $n_i$ parmi les $N_\tau$ positions en temps.

En allant des positions les moins impactées par l'interférence vers les positions les plus impactées par l'interférence, l'ensemble $I_1$ contient les $L_1$ premières positions, l'ensemble $J_1$ contient les $L_1$ positions qui suivent, et l'ensemble $J'_1$ contient les $L_2$ positions qui suivent.

On procède de même pour une fréquence donnée $m + 1$, correspondant à la transmission de symboles non pré-codés.

En allant des positions les moins impactées par l'interférence vers les positions les plus impactées par l'interférence, l'ensemble $I'_2$ contient les $L_2$ premières positions, l'ensemble $I_2$ contient les $L_1$ positions qui suivent, et l'ensemble $J_2$ contient les $L_1$ positions restantes.

En reprenant l'exemple de la figure 2, avec des rendements de code $r_1 = 8/17$ et $r_2 = 9/17$, on obtient $L_1 = 7$ et $L_2 = 2$.

L'ordre croissant des 16 positions selon la puissance d'interférence est, comme dans l'exemple décrit en relation avec la figure 3 :

| $n_1$ | $n_6$ | $n_{12}$ | $n_{11}$ | $n_7$ | $n_{16}$ | $n_2$ | $n_5$ | $n_{13}$ | $n_{10}$ | $n_8$ | $n_{15}$ | $n_3$ | $n_4$ | $n_{14}$ | $n_9$ |
|---|---|---|---|---|---|---|---|---|---|---|---|---|---|---|---|

Dans l'espace temps-fréquence, les positions des symboles pré-codés sont :

$$N_\tau = \{(m \; paire, n = 1,2,3,4,5,6,7,8,9,10,11,12,13,14)$$

et les positions des symboles non pré-codés sont :

$$N_\tau = \{(m \; impaire, n = 1,2,3,4,5,6,7,8,9,10,11,12,13,14)$$

On obtient donc les ensembles suivants :

- pour m pair :

$$I_1 = \{n = 1,6,12,11,7,16,2\}$$

$$J_1 = \{n = 4,3,15,8,10,13,5\}$$

$$J_1' = \{n = 9,14\}$$

- pour *m* impair :

$$I_2' = \{n = 1,6\}$$

$$I_2 = \{n = 12,11,7,16,2,5,13\}$$

$$J_2 = \{n = 9,14,4,3,15,8,10\}$$

Comme déjà indiqué, on procède de la même manière pour les autres positions de la porteuse m, et pour les autres porteuses (i.e les autres fréquences).

On considère selon un deuxième exemple que l'étape de pré-codage 66 met en oeuvre un pré-codage SIPC en temps, selon lequel on cherche à annuler, ou à tout le moins réduire, uniquement les interférences entre symboles ICI, en pré-codant un premier sous-ensemble de symboles OQAM. On considère également :

- un facteur de compression $\tau$ = 0.8, donc une période des interférences $N_\tau$ = 16 ;
- que le motif de transmission correspond à une alternance en temps de deux symboles pré-codés, et de deux symboles non pré-codés, et une alternance en fréquence d'un symbole pré-codé, et d'un symbole non pré-codé, pour réduire l'interférence entre symboles.

Sur une porteuse, i.e. pour une fréquence donnée *m,* on calcule la puissance d'interférences pour les $N_\tau$ positions temporelles associées.

Comme on cherche à pré-coder la moitié des symboles à transmettre, on considère que parmi ces $N_\tau$ positions temporelles, $N_{\tau 1} = \dfrac{N_\tau}{2}$ sont affectées à des symboles pré-codés, et le reste des positions, soit $N_{\tau 2} = \dfrac{N_\tau}{2}$ positions, sont affectées à des symboles non pré-codés.

On classe les $N_{\tau 1}$ positions sont selon un ordre croissant de la puissance d'interférence.

En allant des positions les moins impactées par l'interférence vers les positions les plus impactées par l'interférence, l'ensemble $I_1$ contient les $L_1$ premières positions, l'ensemble $J_1$ contient les $L_1$ positions qui suivent, et l'ensemble $J_1'$ contient les $L_2$ positions qui suivent.

On classe de même les $N_{\tau 2}$ positions sont selon un ordre croissant de la puissance d'interférence.

En allant des positions les moins impactées par l'interférence vers les positions les plus impactées par l'inter-

férence, l'ensemble $I'_2$ contient les $L_2$ premières positions, l'ensemble $I_2$ contient les $L_1$ positions qui suivent, et l'ensemble $J_2$ contient les $L_1$ positions restantes.

En reprenant l'exemple de la figure 2, avec des rendements de code $r_1$ = 8/17 et $r_2$ = 9/17, on obtient $L_1$ = 7 et $L_2$ = 2.

L'ordre croissant des 16 positions selon la puissance d'interférence est, comme dans l'exemple décrit en relation avec la figure 3 :

| $n_1$ | $n_6$ | $n_{12}$ | $n_{11}$ | $n_7$ | $n_{16}$ | $n_2$ | $n_5$ | $n_{13}$ | $n_{10}$ | $n_8$ | $n_{15}$ | $n_3$ | $n_4$ | $n_{14}$ | $n_9$ |
|---|---|---|---|---|---|---|---|---|---|---|---|---|---|---|---|

Dans l'espace temps-fréquence, les positions des symboles pré-codés sont :

$$N_{\tau_1} = \{(m\ paire, n = 1,2,5,6,9,10,13,14)\ et\ (m\ impaire, n = 3,4,7,8,11,12,15,16)$$

et les positions des symboles non pré-codés sont :

$$N_{\tau_2} = \{(m\ paire, n = 3,4,7,8,11,12,15,16)\ et\ (m\ impaire, n = 1,2,5,6,9,10,13,14)\}$$

On obtient donc les ensembles suivants :

$$I_1 = \{(m\ paire, n = 1), (m\ paire, n = 6), (m\ impaire, n = 12), (m\ impaire, n = 11), (m\ impaire, n = 7), (m\ impaire, n = 16), (m\ paire, n = 2)\}$$

$$J_1 = \{(m\ impaire, n = 4), (m\ impaire, n = 3), (m\ impaire, n = 15), (m\ impaire, n = 8), (m\ paire, n = 10), (m\ paire, n = 13), (m\ paire, n = 5)\}$$

$$J'_1 = \{(m\ paire, n = 9), (m\ paire, n = 14)\}$$

$$I'_2 = \{(m\ impaire, n = 1), (m\ impaire, n = 6)\}$$

$$I_2 = \{(m\ paire, n = 12), (m\ paire, n = 11), (m\ paire, n = 7), (m\ paire, n = 16), (m\ impaire, n = 2), (m\ impaire, n = 5), (m\ impaire, n = 13)\}$$

$$J_2 = \{(m\ impaire, n = 9), (m\ impaire, n = 14), (m\ paire, n = 4), (m\ paire, n = 3), (m\ paire, n = 15), (m\ paire, n = 8), (m\ impaire, n = 10)\}$$

On présente finalement, en relation avec la figure 7, la structure simplifiée d'un dispositif mettant en oeuvre une technique de génération d'un signal multiporteuse selon un mode de réalisation de l'invention.

Un tel dispositif de génération d'un signal multiporteuse, ou émetteur, comprend une mémoire 71 comprenant une mémoire tampon, une unité de traitement 72, équipée par exemple d'un ou plusieurs processeurs P, et pilotée par une application ou un programme d'ordinateur 73, mettant en oeuvre les étapes du procédé de génération selon un mode de réalisation de l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un ensemble d'éléments d'information (N). Le microprocesseur de l'unité de traitement 72 met en oeuvre les étapes du procédé de génération décrit précédemment, selon les instructions du programme d'ordinateur 73, pour générer au moins un bloc de symboles multiporteuses.

**Revendications**

1.  **Procédé de génération** d'un signal multiporteuse, formé d'une succession temporelle de symboles multiporteuses destinés à être transmis à une cadence supérieure à la cadence de Nyquist,
    **caractérisé en ce qu'**il met en oeuvre les étapes suivantes, pour la génération d'au moins un bloc de symboles multiporteuses :

    - codage (11, 21) d'un ensemble d'éléments d'information, délivrant un ensemble d'éléments codés comprenant lesdits éléments d'information et des éléments de redondance,
    - poinçonnage (121, 221) d'un premier sous-ensemble d'éléments codés dudit ensemble d'éléments codés, selon un premier motif de poinçonnage, délivrant un premier sous-ensemble d'éléments codés poinçonnés,
    - poinçonnage (122, 222) d'un deuxième sous-ensemble d'éléments codés dudit ensemble d'éléments codés, complémentaire dudit premier sous-ensemble, selon un deuxième motif de poinçonnage, délivrant un deuxième sous-ensemble d'éléments codés poinçonnés,
    - mappage (14, 24), sur au moins un symbole complexe, des éléments codés poinçonnés desdits premier et deuxième sous-ensemble d'éléments codés poinçonnés,
    - génération (15, 26) dudit bloc de symboles multiporteuses, mettant en oeuvre un mappage temps-fréquence dudit au moins un symbole complexe, affectant aux symboles complexes construits à partir desdits éléments d'information des positions moins soumises aux interférences et aux symboles complexes construits à partir desdits éléments de redondance des positions plus soumises aux interférences.

2.  Procédé selon la revendication 1, **caractérisé en ce qu'**un rendement de codage associé auxdites étapes de codage et de poinçonnage dudit premier sous-ensemble d'éléments codés est différent d'un rendement de codage associé auxdites étapes de codage et de poinçonnage dudit deuxième sous-ensemble d'éléments codés.

3.  Procédé selon la revendication 1, **caractérisé en ce qu'**il comprend en outre une étape de pré-codage (25) d'un premier sous-ensemble de symboles complexes, délivrant un premier sous-ensemble de symboles complexes pré-codés,
    ladite étape de pré-codage modifiant la valeur d'un symbole complexe dudit premier sous-ensemble de symboles complexes pour tenir compte d'une interférence générée par au moins un autre symbole complexe destiné à être transmis au même instant ou à une même fréquence selon un motif de transmission temps-fréquence prédéterminé.

4.  Procédé selon la revendication 3, **caractérisé en ce que** ledit premier sous-ensemble de symboles complexes est généré à partir des éléments codés poinçonnés dudit premier sous-ensemble d'éléments codés, et **en ce que** ledit deuxième sous-ensemble de symboles complexes est généré à partir des éléments codés poinçonnés dudit deuxième sous-ensemble d'éléments codés.

5.  Procédé selon la revendication 1, **caractérisé en ce qu'**il comprend en outre une première étape d'entrelacement des éléments codés poinçonnés dudit premier sous-ensemble d'éléments codés poinçonnés et une deuxième étape d'entrelacement des éléments codés poinçonnés dudit deuxième sous-ensemble d'éléments codés poinçonnés, mises en oeuvre préalablement à ladite étape de mappage.

6.  Procédé selon la revendication 5, **caractérisé en ce que** ladite première étape d'entrelacement met en oeuvre au moins un premier motif d'entrelacement pour l'entrelacement des éléments d'information dudit premier sous-ensemble d'éléments codés poinçonnés, et un deuxième motif d'entrelacement pour l'entrelacement d'éléments de redondance dudit premier sous-ensemble d'éléments codés poinçonnés, obtenus à partir desdits éléments d'information,
    et **en ce que** ladite deuxième étape d'entrelacement met en oeuvre au moins un premier motif d'entrelacement pour l'entrelacement des éléments d'information dudit deuxième sous-ensemble d'éléments codés poinçonnés, et un deuxième motif d'entrelacement pour l'entrelacement d'éléments de redondance dudit deuxième sous-ensemble d'éléments codés poinçonnés, obtenus à partir desdits éléments d'information.

7.  Procédé selon la revendication 1, **caractérisé en ce que** ladite étape de génération dudit bloc de symboles multiporteuses tient compte d'au moins une interférence affectant au moins une porteuse dudit signal multiporteuse.

**8.** Procédé selon la revendication 1, **caractérisé en ce que** ladite étape de génération dudit bloc de symboles multiporteuses met en oeuvre les sous-étapes suivantes, pour au moins une porteuse dudit bloc de symboles multiporteuses :

- détermination d'une puissance d'interférence affectant ladite porteuse sur $N_\tau$ positions consécutives en temps ;
- classement desdites $N_\tau$ positions selon ladite puissance d'interférence ;
- mappage temps-fréquence des symboles complexes construits à partir des éléments d'information dudit premier sous-ensemble d'éléments codés poinçonnés vers les positions associées à une puissance d'interférence inférieure ou égale à un seuil prédéterminé, et des symboles complexes construits à partir des éléments de redondance dudit premier sous-ensemble d'éléments codés poinçonnés, vers les positions associées à une puissance d'interférence supérieure audit seuil prédéterminé, et
- mappage temps-fréquence des symboles complexes construits à partir des éléments d'information dudit deuxième sous-ensemble d'éléments codés poinçonnés vers les positions associées à une puissance d'interférence inférieure ou égale à un seuil prédéterminé, et des symboles complexes construits à partir des éléments de redondance dudit deuxième sous-ensemble d'éléments codés poinçonnés, vers les positions associées à une puissance d'interférence supérieure audit seuil prédéterminé.

**9.** Procédé selon la revendication 8, **caractérisé en ce que** le nombre de positions $N_\tau$ dépend du facteur de compression $\tau$ défini pour une transmission à une cadence supérieure à la cadence de Nyquist.

**10. Dispositif de génération** d'un signal multiporteuse, formé d'une succession temporelle de symboles multiporteuses destinés à être transmis à une cadence supérieure à la cadence de Nyquist,
**caractérisé en ce qu'**il comprend :

- un codeur codant un ensemble d'éléments d'information, délivrant un ensemble d'éléments codés comprenant lesdits éléments d'information et des éléments de redondance,
- un premier module de poinçonnage d'un premier sous-ensemble d'éléments codés dudit ensemble d'éléments codés, selon un premier motif de poinçonnage, délivrant un premier sous-ensemble d'éléments codés poinçonnés,
- un deuxième module de poinçonnage d'un deuxième sous-ensemble d'éléments codés dudit ensemble d'éléments codés, complémentaire dudit premier sous-ensemble, selon un deuxième motif de poinçonnage, délivrant un deuxième sous-ensemble d'éléments codés poinçonnés,
- un module de mappage, sur au moins un symbole complexe, des éléments codés poinçonnés desdits premier et deuxième sous-ensemble d'éléments codés poinçonnés,
- un module de génération d'un bloc de symboles multiporteuses, mettant en oeuvre un mappage temps-fréquence dudit au moins un symbole complexe, affectant aux symboles complexes construits à partir desdits éléments d'information des positions moins soumises aux interférences et aux symboles complexes construits à partir desdits éléments de redondance des positions plus soumises aux interférences.

**11. Programme d'ordinateur** comportant des instructions pour la mise en oeuvre d'un procédé selon la revendication 1 lorsque ce programme est exécuté par un processeur.

**Patentansprüche**

**1.** Verfahren zur Erzeugung eines Mehrträgersignals, das aus einer zeitlichen Folge von Mehrträgersymbolen gebildet wird, die dazu bestimmt sind, mit einem Takt übertragen zu werden, der höher als der Nyquist-Takt ist, **dadurch gekennzeichnet, dass** es die folgenden Schritte zum Erzeugen mindestens eines Blocks von Mehrträgersignalen durchführt:

- Codieren (11, 21) einer Menge von Informationselementen, wobei eine Menge von codierten Elementen ausgegeben wird, die die Informationselemente und Redundanzelemente umfassen,
- Punktieren (121, 221) einer ersten Teilmenge von codierten Elementen der Menge von codierten Elementen gemäß einem ersten Punktierungsmuster, wobei eine erste Teilmenge von punktierten codierten Elementen ausgegeben wird,
- Punktieren (122, 222) einer zweiten Teilmenge von codierten Elementen der Menge von codierten Elementen, die komplementär zu der ersten Teilmenge ist, gemäß einem zweiten Punktierungsmuster, wobei eine zweite Teilmenge von punktierten codierten Elementen ausgegeben wird,

- Mapping (14, 24), an mindestens einem komplexen Symbol, der punktierten codierten Elemente der ersten und zweiten Teilmenge von punktierten codierten Elementen,
- Erzeugen (15, 26) des Blocks von Mehrträgersymbolen, wobei ein Zeit-Frequenz-Mapping des mindestens einen komplexen Symbols durchgeführt wird, wobei den komplexen Symbolen, die anhand der Informationselemente aufgebaut sind, weniger störanfällige Positionen und den komplexen Symbolen, die anhand der Redundanzelementen aufgebaut sind, stärker störanfällige Positionen zugewiesen werden.

2. Verfahren nach Anspruch 1, **dadurch gekennzeichnet, dass** eine Codierrate, die den Schritten des Codierens und Punktierens der ersten Teilmenge von codierten Elementen zugeordnet ist, verschieden von einer Codierrate ist, die den Schritten des Codierens und Punktierens der zweiten Teilmenge von codierten Elementen zugeordnet ist.

3. Verfahren nach Anspruch 1, **dadurch gekennzeichnet, dass** es ferner einen Schritt des Vorcodierens (25) einer ersten Teilmenge von komplexen Symbolen umfasst, wobei eine erste Teilmenge von vorcodierten komplexen Symbolen ausgegeben wird,
wobei der Schritt des Vorcodierens den Wert eines komplexen Symbols der ersten Teilmenge von komplexen Symbolen ändert, um eine Störung zu berücksichtigen, die von mindestens einem anderen komplexen Symbol erzeugt wird, das dazu bestimmt ist, zu demselben Zeitpunkt oder mit einer selben Frequenz gemäß einem vorbestimmten Zeit-Frequenz-Übertragungsmuster übertragen zu werden.

4. Verfahren nach Anspruch 3, **dadurch gekennzeichnet, dass** die erste Teilmenge von komplexen Symbolen anhand der punktierten codierten Elemente der ersten Teilmenge von codierten Elementen erzeugt wird, und dadurch, dass die zweite Teilmenge von komplexen Symbolen anhand der punktierten codierten Elemente der zweiten Teilmenge von codierten Elementen erzeugt wird.

5. Verfahren nach Anspruch 1, **dadurch gekennzeichnet, dass** es ferner einen ersten Schritt des Verschachtelns der punktierten codierten Elemente der ersten Teilmenge von punktierten codierten Elementen und einen zweiten Schritt des Verschachtelns der punktierten codierten Elemente der zweiten Teilmenge von punktierten codierten Elementen umfasst, die vor dem Schritt des Mappings durchgeführt werden.

6. Verfahren nach Anspruch 5, **dadurch gekennzeichnet, dass** der erste Schritt des Verschachtelns mindestens ein erstes Verschachtelungsmuster zum Verschachteln der Informationselemente der ersten Teilmenge von punktierten codierten Elementen und ein zweites Verschachtelungsmuster zum Verschachteln von Redundanzelementen der ersten Teilmenge von punktierten codierten Elementen durchführt, die anhand der Informationselemente erhalten werden, und dadurch, dass der zweite Schritt des Verschachtelns mindesten ein erstes Verschachtelungsmuster zum Verschachteln der Informationselemente der zweiten Teilmenge von punktierten codierten Elementen und ein zweites Verschachtelungsmuster zum Verschachteln von Redundanzelementen der zweiten Teilmenge von punktierten codierten Elementen durchführt, die anhand der Informationselemente erhalten werden.

7. Verfahren nach Anspruch 1, **dadurch gekennzeichnet, dass** der Schritt des Erzeugens des Blocks von Mehrträgersymbolen mindestens eine Störung berücksichtigt, die mindestens einen Träger des Mehrträgersignals beeinflusst.

8. Verfahren nach Anspruch 1, **dadurch gekennzeichnet, dass** der Schritt des Erzeugens des Blocks von Mehrträgersymbolen die folgenden Teilschritte für mindestens einen Träger des Blocks von Mehrträgersymbolen durchführt:

- Bestimmen einer Störleistung, die den Träger an $N_\tau$ zeitlich aufeinanderfolgenden Positionen beeinflusst;
- Klassifizieren der $N_\tau$ Positionen nach der Störleistung;
- Zeit-Frequenz-Mapping der komplexen Symbole, die anhand der Informationselemente der ersten Teilmenge von punktierten codierten Elementen aufgebaut sind, zu den Positionen, die einer Störleistung zugeordnet sind, die kleiner oder gleich einem vorbestimmten Schwellenwert ist, und der komplexen Symbole, die anhand der Redundanzelemente der ersten Teilmenge von punktierten codierten Elementen aufgebaut sind, zu den Positionen, die einer Störleistung zugeordnet sind, die größer als der vorbestimmte Schwellenwert ist, und
- Zeit-Frequenz-Mapping der komplexen Symbole, die anhand der Informationselemente der zweiten Teilmenge von punktierten codierten Elementen aufgebaut sind, zu den Positionen, die einer Störleistung zugeordnet sind, die kleiner oder gleich einem vorbestimmten Schwellenwert ist, und der komplexen Symbole, die anhand der Redundanzelemente der zweiten Teilmenge von punktierten codierten Elementen aufgebaut sind, zu den Positionen, die einer Störleistung zugeordnet sind, die größer als der vorbestimmte Schwellenwert ist.

9. Verfahren nach Anspruch 8, **dadurch gekennzeichnet, dass** die Anzahl von Positionen $N_\tau$ von dem Kompressionsfaktor $\tau$ abhängt, der für eine Übertragung mit einem Takt definiert wird, der höher als der Nyquist-Takt ist.

10. Vorrichtung zur Erzeugung eines Mehrträgersignals, das aus einer zeitlichen Folge von Mehrträgersymbolen gebildet wird, die dazu bestimmt sind, mit einem Takt übertragen zu werden, der höher als der Nyquist-Takt ist, **dadurch gekennzeichnet, dass** sie umfasst:

   - einen Codierer, der eine Menge von Informationselementen codiert, wobei eine Menge von codierten Elementen ausgegeben wird, die die Informationselemente und Redundanzelemente umfassen,
   - ein erstes Punktierungsmodul zum Punktieren einer ersten Teilmenge von codierten Elementen der Menge von codierten Elementen gemäß einem ersten Punktierungsmuster, wobei eine erste Teilmenge von punktierten codierten Elementen ausgegeben wird,
   - ein zweites Punktierungsmodul zum Punktieren einer zweiten Teilmenge von codierten Elementen der Menge von codierten Elementen, die komplementär zu der ersten Teilmenge ist, gemäß einem zweiten Punktierungsmuster, wobei eine zweite Teilmenge von punktierten codierten Elementen ausgegeben wird,
   - ein Mapping-Modul zum Mapping, an mindestens einem komplexen Symbol, der punktierten codierten Elemente der ersten und zweiten Teilmenge von punktierten codierten Elementen,
   - ein Modul zum Erzeugen eines Blocks von Mehrträgersymbolen, das ein Zeit-Frequenz-Mapping des mindestens einen komplexen Symbols durchführt, wobei den komplexen Symbolen, die anhand der Informationselemente aufgebaut sind, weniger störanfällige Positionen und den komplexen Symbolen, die anhand der Redundanzelemente aufgebaut sind, stärker störanfällige Positionen zugewiesen werden.

11. Computerprogramm mit Anweisungen zum Durchführen eines Verfahrens nach Anspruch 1, wenn dieses Programm von einem Prozessor ausgeführt wird.

## Claims

1. Method for generating a multicarrier signal, formed of a time sequence of multicarrier symbols that are intended to be transmitted at a rate higher than the Nyquist rate, **characterized in that** it implements the following steps in order to generate at least one block of multicarrier symbols:

   - coding (11, 21) a set of information elements, delivering a set of coded elements comprising said information elements and redundancy elements,
   - puncturing (121, 221) a first subset of coded elements of said set of coded elements, in a first puncturing pattern, delivering a first subset of punctured coded elements,
   - puncturing (122, 222) a second subset of coded elements of said set of coded elements, complementary to said first subset, in a second puncturing pattern, delivering a second subset of punctured coded elements,
   - mapping (14, 24) the punctured coded elements of said first and second subset of punctured coded elements onto at least one complex symbol,
   - generating (15, 26) said block of multicarrier symbols, implementing time-to-frequency mapping of said at least one complex symbol, assigning positions that are less subject to interference to complex symbols constructed from said information elements and positions that are more subject to interference to complex symbols constructed from said redundancy elements.

2. Method according to Claim 1, **characterized in that** a coding rate associated with said steps of coding and puncturing said first subset of coded elements is different from a coding rate associated with said steps of coding and puncturing said second subset of coded elements.

3. Method according to Claim 1, **characterized in that** it furthermore comprises a step of pre-coding (25) a first subset of complex symbols, delivering a first subset of pre-coded complex symbols, said pre-coding step modifying the value of a complex symbol of said first subset of complex symbols so as to take account of interference generated by at least one other complex symbol intended to be transmitted at the same time or at the same frequency in a predetermined time/frequency transmission pattern.

4. Method according to Claim 3, **characterized in that** said first subset of complex symbols is generated from punctured coded elements of said first subset of coded elements, and **in that** said second subset of complex symbols is generated from punctured coded elements of said second subset of coded elements.

**5.** Method according to Claim 1, **characterized in that** it furthermore comprises a first step of interleaving the punctured coded elements of said first subset of punctured coded elements and a second step of interleaving the punctured coded elements of said second subset of punctured coded elements, said first and second interleaving steps being implemented prior to said mapping step.

**6.** Method according to Claim 5, **characterized in that** said first interleaving step implements at least a first interleaving pattern for the interleaving of the information elements of said first subset of punctured coded elements, and a second interleaving pattern for the interleaving of redundancy elements of said first subset of punctured coded elements, obtained from said information elements, and **in that** said second interleaving step implements at least a first interleaving pattern for the interleaving of the information elements of said second subset of punctured coded elements, and a second interleaving pattern for the interleaving of redundancy elements of said second subset of punctured coded elements, obtained from said information elements.

**7.** Method according to Claim 1, **characterized in that** said step of generating said block of multicarrier symbols takes account of at least one instance of interference affecting at least one carrier of said multicarrier signal.

**8.** Method according to Claim 1, **characterized in that** said step of generating said block of multicarrier symbols implements the following substeps, for at least one carrier of said block of multicarrier symbols:

- determining an interference power affecting said carrier over $N_\tau$ temporally consecutive positions;
- classifying said $N_\tau$ positions according to said interference power;
- carrying out time-to-frequency mapping of complex symbols constructed from information elements of said first subset of punctured coded elements to positions associated with an interference power less than or equal to a predetermined threshold, and of complex symbols constructed from redundancy elements of said first subset of punctured coded elements to positions associated with an interference power greater than said predetermined threshold, and
- carrying out time-to-frequency mapping of complex symbols constructed from information elements of said second subset of punctured coded elements to positions associated with an interference power less than or equal to a predetermined threshold, and of complex symbols constructed from redundancy elements of said second subset of punctured coded elements to positions associated with an interference power greater than said predetermined threshold.

**9.** Method according to Claim 8, **characterized in that** the number of positions $N_\tau$ depends on the compression factor $\tau$ defined for a transmission at a rate higher than the Nyquist rate.

**10.** Device for generating a multicarrier signal, formed of a time sequence of multicarrier symbols that are intended to be transmitted at a rate higher than the Nyquist rate, **characterized in that** it comprises:

- an encoder coding a set of information elements, delivering a set of coded elements comprising said information elements and redundancy elements,
- a first module for puncturing a first subset of coded elements of said set of coded elements, in a first puncturing pattern, delivering a first subset of punctured coded elements,
- a second module for puncturing a second subset of coded elements of said set of coded elements, complementary to said first subset, in a second puncturing pattern, delivering a second subset of punctured coded elements,
- a module for mapping the punctured coded elements of said first and second subset of punctured coded elements onto at least one complex symbol,
- a module for generating a block of multicarrier symbols, implementing time-to-frequency mapping of said at least one complex symbol, assigning positions that are less subject to interference to complex symbols constructed from said information elements and positions that are more subject to interference to complex symbols constructed from said redundancy elements.

**11.** Computer program comprising instructions for implementing a method according to Claim 1 when this program is executed by a processor.

EP 3 526 919 B1

## Fig. 1

N → COD (11) → $B_1$ | $B_2$

PUNCT 1 (121) → π (131) → B: $B'_1$ | $B'_2$

PUNCT 2 (122) → π (132) →

$B'_1$ | $B'_2$ → MAP (14) → MOD (15)

_Fig. 1_

## Fig. 2

N → COD (21) → $B_1$ | $B_2$

PUNCT 1 (221) → π (231) → B: $B'_1$ | $B'_2$

PUNCT 2 (222) → π (232) →

$B'_1$ | $B'_2$ → MAP (24) → PRE COD (25) → MOD (26)

_Fig. 2_

Fig. 3

EP 3 526 919 B1

Fig. 4

Fig. 5

Fig. 7

EP 3 526 919 B1

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **NAILA LAHBABI et al.** Sparse interférence Pre-Cancellation for FTN-OQAM Systems. *22nd European Wireless Conférence,* 18 Mai 2016